# FASCICULE DE BREVET EUROPEEN

(11) **EP 4 017 658 B1**
(45) Date de publication et mention de la délivrance du brevet: **14.12.2022**
(21) Numéro de dépôt: 21799050.6
(22) Date de dépôt: 26.10.2021
(51) Int. Cl.: B21D 5/00, B21D 5/02, B21D 37/14, B21D 43/10, B21D 43/11, B21D 43/02, G05B 19/418, B25H 3/00, B65H 1/08

(54) **CELLULE DE PLIAGE DE TOLES ENTIEREMENT AUTOMATISEE**
VOLLAUTOMATISCHE BLECH-BIEGEZELLE
FULLY AUTOMATED CELL FOR FOLDING SHEETS

(30) Priorité: 28.10.2020 EP 20204355; 10.02.2021 EP 21156189; 02.03.2021 EP 21160343
(43) Date de publication de la demande: 29.06.2022
(73) Titulaire: Concept & Forme Developpements SA, 5170 Profondeville (BE)
(72) Inventeur: PITANCE, Gérard, 5170 Profondeville (BE)
(74) Mandataire: AWA Benelux
(86) Numéro de dépôt international: PCT/EP2021/079727
(87) Numéro de publication internationale: WO 2022/090258

(56) Documents cités:
- EP-A2- 2 138 247
- WO-A1-2012/063710
- US-A1- 2018 056 357
- Anonymous: "Magasins grande capacité STOPA | TRUMPF", , 2 juin 2020 (2020-06-02), XP055790988, https://www.trumpf.com/fr_FR/produits/mach ines-systemes/systemes-de-stockage/magasin s-grande-capacite-stopa/ Extrait de l'Internet: URL:https://web.archive.org/web/2020060217 5424/https://www.trumpf.com/fr_FR/produits /machines-systemes/systemes-de-stockage/ma gasins-grande-capacite-stopa/ [extrait le 2021-03-29]

## Description

### Objet de l'invention

La présente invention se rapporte à un ensemble cohérent de solutions ou fonctions techniques destinées à accroître très significativement l'autonomie de fonctionnement sans assistance humaine, la flexibilité ainsi que la productivité d'une ou plusieurs cellules de pliage automatisées. On vise l'obtention d'une autonomie de fonctionnement de « longue durée », c'est-à-dire un fonctionnement automatisé sans assistance autre que le système de programmation, sur une longue période de temps, typiquement au moins 24 à 48 heures (soit de 3 à 6 pauses de travail consécutives).

### Arrière-plan technologique et état de la technique

Une analyse approfondie de l'état de l'art a été effectuée par les inventeurs. Elle est synthétisée ci-après :

### L'importance du magasin automatisé

Un simple survol du plan d'affectation des espaces d'un atelier de tôlerie suffit à appréhender l'importance des surfaces dédiées aux flux logistiques. Une analyse plus approfondie des coûts de manutention directs (*) et indirects (**) révélera ensuite la part importante que représentent les flux logistiques internes dans le coût de fonctionnement de l'atelier (***).¹

Il est connu que le concept d'industrie 4.0 correspond à une nouvelle façon d'organiser les moyens de production. Cette nouvelle industrie s'affirme comme la convergence du monde virtuel, de la conception numérique, de la gestion (opérations, finance et marketing) avec les produits et objets du monde réel. On parle souvent de quatrième révolution industrielle. L'implémentation du concept 4.0 ne consiste donc pas simplement à doter l'atelier d'outils de production plus ou moins automatisés mais bien à appréhender globalement l'ensemble des fonctions de l'atelier et leurs interactions en vue :
- d'optimiser les flux de matières premières, de pièces découpées et de pièces façonnées ;
- de planifier et fiabiliser l'approvisionnement des machines de production et d'en optimiser le taux d'exploitation ;
- de sécuriser les opérations de manutentions ;
- de réduire la dépendance vis-à-vis du facteur humain et concentrer les ressources humaines sur les tâches valorisantes et à forte valeur ajoutée.

Dans l'usine de tôlerie 4.0, l'automatisation des machines de découpe et de formage des tôles est donc indissociable du magasin automatisé auquel elles sont connectées, dans tous les sens du terme, et qui constitue en quelque sorte la colonne vertébrale de l'atelier.

Si la plupart des fabricants ont résolu, ou sont en passe de résoudre, les problèmes liés à l'approvisionnement automatique des machines de découpe ainsi que la fiabilisation des opérations de découpe elles-mêmes, il n'en va pas encore de même pour l'optimalisation des flux et l'automatisation des
¹ (*) Manutentions effectuées par l'opérateur du poste de travail ou de la machine. (**) Manutentions effectuées par du personnel logistique dédié. (***) 25 à 35% des coûts de main d'oeuvre directs et indirects. processus de formage des tôles où de nombreux progrès sont encore attendus afin de rendre ces outils et les investissements lourds qu'ils représentent véritablement rentables.

Après un long travail d'exploration du marché et des rencontres avec les principaux acteurs du secteur, on a constaté qu'en définitive l'usine de tôlerie 4.0 demeurera une utopie aussi longtemps que le niveau d'autonomie des machines de formage de la tôle et des cellules de pliage robotisées en particulier ne sera pas aligné sur celle des machines de découpe.

### Les machines de formage de la tôle

Dans le travail de comparaison par les inventeurs des différentes techniques de formage de la tôle et des niveaux d'automatisation qu'elle procurent, on a avant tout cherché à bien comprendre les possibilités et surtout les limites de technologies aussi différentes que :
- les panneauteuses ;
- les plieuses à tablier qui ont connus ces dernières années des évolutions spectaculaires ;
- les presses-plieuses conventionnelles.

### Résumé de l'analyse comparative des techniques de pliage et de leur adaptabilité au concept 4.0

Si les panneauteuses constituent incontestablement la technologie la plus proche du concept 4.0 en termes d'automatisation, elles sont aussi les plus limitatives en termes de possibilités de mise en oeuvre. A titre d'exemple, on a constaté que, l'activité spécifique des inventeurs, moins de 5% des pièces sont compatibles avec les contraintes du panneautage. Conscients de ces limites, les fabricants de panneauteuses proposent désormais de les coupler à une presse-plieuse, robotisée ou manuelle, mais il est évidemment impossible d'équilibrer la charge de ce tandem de machines, ce qui compromet leur rentabilité.

Les plieuses à tablier ont aujourd'hui atteint un excellent niveau d'automatisation et offrent des possibilités de formage plus étendues que les panneauteuses tout en étant nettement moins rapides cependant. Dans ce type de machine, la présence d'un opérateur est incontournable et les possibilités de mise en oeuvre restent trop limitées, notamment lorsque les pièces comportent des plis à leur dos ou qu'elles proviennent d'une poinçonneuse où elles ont fait l'objet d'opérations de déformation (crevés, petits emboutissages, nervurages, etc.).

Les principaux avantages des presses-plieuses conventionnelles résident dans leurs possibilités de mise en oeuvre très étendues et dans leur souplesse d'adaptation aux quantités à produire. Le tandem presse-plieuse à CNC (machine-outil à commande numérique) servie par un opérateur reste encore le plus souvent l'investissement le plus souple et le plus rentable, d'autant plus si la production est localisée dans un pays dont la main d'œuvre est à bas coût.

L'automatisation des presses-plieuses est ainsi devenu un enjeu important pour tous les fabricants de ce type de machines.

Certains proposent désormais des systèmes de montage automatique des outils intégrés à la machine, comme par exemple SALVAGNINI (ATA System), TRUMPF (ToolMaster System), AMADA (ATC System), BYSTRONIC (Xpert Tool Changer System), etc. Le principal intérêt de ce type d'asservissement réside dans le confort accru de l'opérateur. Le retour sur investissement est cependant difficile à percevoir. La réduction du temps de « set-up » est également très relative et n'est jamais à la mesure du coût très élevé de cette option.

Les cellules de pliage automatisées sont, encore aujourd'hui, des outils réservés avant tout à des productions de grandes séries et/ou de pièces trop grandes ou trop lourdes à manipuler pour un seul opérateur.

Malgré les nombreux progrès accomplis, aucun fabricant n'est aujourd'hui en mesure de proposer une cellule de pliage robotisée capable de fonctionner sans assistance durant plus de huit heures consécutives. De plus, cette performance toute relative est fortement conditionnée par la conjugaison de divers paramètres tels que : taille de lots (séries), volumétrie des pièces pliées, possibilités de préhension, etc.

Une cellule de pliage robotisée représente un investissement lourd dont le taux d'exploitation est encore fortement limité par un faible niveau d'autonomie et par la dépendance au facteur humain. C'est la raison pour laquelle la très grande majorité des ateliers continue à privilégier la solution d'une machine numérique servie par un opérateur.

Le document WO 2012/063710 A1 divulgue une installation de presse-plieuse, avec tous les éléments de la revendication principale d'installation, sauf les éléments suivants :
- un magasin automatisé, ainsi que tous les moyens automatisés auxiliaires, à savoir pour acheminer les pièces à plier dans la cellule, évacuer les pièces pliées et palettes hors de la cellule, ou acheminer des palettes vides dans la cellule, etc., l'échange se faisant ici entre la cellule et le magasin automatisé ;
- un magasin ou ensemble d'étagères à outils de pliage, et des dispositifs de rangement pour stocker, dans l'enceinte de la cellule, à des emplacements paramétrables, l'ensemble des outils de pliage, préhenseurs et accessoires nécessaires en vue de garantir l'autonomie de fonctionnement sans assistance de la cellule pendant une période de temps déterminée.

On notera donc que le fait que le magasin soit automatisé ainsi que l'existence de zones d'approvisionnement et de dépose en communication avec le magasin automatisé ne sont pas divulgués dans ce document.

Le document US 2018/056357 A1 divulgue un système de presse-plieuse, avec un manipulateur ayant des mouvements libres au sol (même en l'absence de rail fixe) lui permettant de passer d'une machine à l'autre ou à un magasin d'outils, un couplage permettant la fixation du manipulateur à une machine donnée lorsque la machine est opérationnelle. L'objectif est d'améliorer la flexibilité de déplacement du manipulateur par rapport à la presse plieuse. Cependant, cette solution qui se rapproche de l'utilisation d'AGV est de nature à fortement augmenter l'emprise au sol de la cellule et à complexifier fortement la gestion des flux.

Le document : https://www.trumpf.com/fr FR/produits/machines-systemes/systemes-de-stockage/magasins-grande-capacite-stopa/ est un extrait du site internet de Trumpf, relatif au système de stockage de grande capacité STOPA. Ce document divulgue un magasin automatisé combiné à plusieurs machines dont une cellule de pliage décrite de manière générale, garantissant ainsi un flux de matières et d'informations dans le procédé d'usinage de tôles avec une productivité ininterrompue (7j/7 et 24h/24). Des convoyeurs transportent les matières premières et pièces usinées d'une machine à l'autre. La vidéo ne montre pas explicitement que la zone d'évacuation des pièces finies dans la cellule de pliage est en communication avec le magasin automatisé (mais bien avec un chariot élévateur). Si les flux entrants de la cellule de pliage via une ou plusieurs tours d'un magasin automatisé linéaire sont incontestablement gérés dans la solution de Trumpf, même s'il pourrait paraître logique à l'homme de métier qu'il pourrait en être de même des flux sortants, force est de constater qu'aucun des nombreux experts agissant pour le compte des fabricants de cellules de pliage automatisées n'a envisagé sérieusement jusqu'ici à mettre en œuvre cette solution, alors que ces mêmes fabricants, pour la plupart, ont depuis longtemps automatisé totalement les flux entrants et sortants des cellules de découpe laser et des poinçonneuses, démontrant ainsi l'existence de problèmes techniques spécifiques aux cellules de pliage robotisées et non solutionnés à ce jour (voir par ex. :
https://www.stopa.com/referenzen/stopa-lagersysteme/binder/STOPA Binder FR.pdf).

### Position du problème général

Une analyse détaillée montre que l'invention ou les inventions doivent poursuivre les différents objectifs généraux suivants :
1. Objectifs conceptuels
   L'objectif principal est de rendre les cellules de pliage compatibles avec le concept 4.0, ce à quoi elles ne peuvent prétendre aujourd'hui. La cellule idéale devrait pouvoir fonctionner, sans aucun opérateur, le samedi et le dimanche sans discontinuité, soit 48 heures d'autonomie totale sans aucune assistance humaine mais avec *ad minimum* un niveau de productivité comparable à celui d'une presse-plieuse de dernière génération servie par un opérateur compétent et motivé.
2. Objectifs techniques.
   - Solutionner tous les problèmes qui limitent aujourd'hui l'autonomie de la cellule et qui font dire à tous les fabricants, sans exception, qu'une cellule de pliage ne peut fonctionner au mieux que quelques heures sans opérateur, et en particulier :
      - Approvisionner automatiquement la cellule en pièces à plier, et ce en assurant la disponibilité de celles-ci ;.
      - Evacuer automatiquement des pièces pliées.
      - Assurer la disponibilité au sein de la cellule du nombre de préhenseurs, respectivement du nombre d'outils de pliage, permettant de garantir 48 heures d'autonomie totale sans assistance humaine.
   - Maximiser la productivité de la machine en réduisant les lourdeurs de fonctionnement mises en évidence ci-dessus. La productivité horaire moyenne de la cellule et du robot devrait être au minimum équivalente à celle d'une presse-plieuse conventionnelle de nouvelle génération servie par un opérateur motivé et expérimenté. Ceci doit être vrai non seulement pour les pièces lourdes et encombrantes où la machine est généralement plus productive qu'un opérateur, mais aussi pour les pièces où la dextérité de l'homme surpasse habituellement le robot en rapidité d'exécution, et en particulier :
      - Réduire les temps de montage et démontage des outils de pliage.
      - Supprimer l'opération de contrôle d'indexage des pièces à plier et la remplacer par un système de reconnaissance optique.
      - Optimiser les déplacements du robot sur le track par une refonte globale de l'architecture de la cellule.
3. Objectifs économiques
   Plus le prix de la cellule sera attractif, plus ces outils seront accessibles à un grand nombre d'utilisateurs potentiels et plus sera élevé le nombre de machines (ROI sur 5 ans, possibilité de phasage de l'investissement, réduction du rôle de l'opérateur et des coûts y afférents).
4. Objectifs liés aux différents profils industriels
   Dans l'optimisation de la cellule de pliage, les inventeurs ne se sont pas contentés de réfléchir à des solutions répondant à leurs propres besoins mais ont également pris en compte les attentes d'autres profils d'utilisateurs.
   - Type d'activités : sous-traitance tôlerie, production propre, activité à forte saisonnalité, etc.
   - Organisation de la production :
      - Grandes séries récurrentes.
      - Grandes quantités annuelles mais production en flux tendu par petits batchs, lean production.
      - Petites séries récurrentes.
5. Objectifs liés aux contraintes d'intégration d'une cellule robotisée
   L'emprise au sol d'une cellule de pliage robotisées n'est pas négligeable. Une architecture de cellule compacte élargirait les possibilités d'intégration à des ateliers où l'espace est compté, sans compromettre pour autant les objectifs de productivité et d'autonomie. Les solutions qui offrent plus de liberté doivent donc être privilégiées.
6. Objectifs liés aux interactions de la cellule avec les autres postes de l'atelier
   Ainsi que décrit ci-dessus, le magasin automatisé est réellement la colonne vertébrale de l'atelier de tôlerie 4.0. Il doit représenter également une part importante de la solution si l'on veut amener les cellules de pliage robotisées à une niveau équivalent à celui des machines de découpe.

### Buts de l'invention

En résumé, l'invention a pour principaux buts :
1. Une autonomie de fonctionnement de 48 heures ou plus.
2. Ce niveau d'autonomie ne peut en aucun cas être conditionné par la présence d'un opérateur, fût-ce même par intermittence.
3. L'objectif d'accroissement de l'autonomie doit aller de pair avec une amélioration de la flexibilité de la cellule, notamment dans le cas de petites séries récurrentes nécessitant une grande diversité d'outils de pliage et de préhenseurs.
4. Tous les éléments nécessaires à la cellule pour atteindre les objectifs visés, doivent être présents dans la cellule ou doivent pouvoir être amenés dans celle-ci, ou évacués hors de celle-ci, de manière entièrement automatique et programmable, ces éléments comprenant notamment et à titre non exhaustif :
   - les outils de pliage standards ;
   - les outils de pliage spéciaux ;
   - les outils réservés à l'usage exclusif d'un client ;
   - les préhenseurs universels ;
   - les préhenseurs spécifiques ;
   - les accessoires permettant d'optimiser l'empilage des pièces pliées et/ou de protéger les pièces fragiles ;
   - les contenants destinés au « dropping » en vrac de pièces de faible encombrement ;
   - les systèmes de palettisation destinés à l'approvisionnement de la cellule en pièces à plier ;
   - les systèmes de palettisation destinés à la réception des pièces pliées ;
   - les systèmes de palettisation mixtes ou plurifonctionnels ;
   - les organisateurs de commandes, etc.

### Principaux éléments caractéristiques de l'invention

Un premier aspect de la présente invention se rapporte, selon les termes de la revendication 1, à une installation industrielle comportant une cellule de pliage de tôles automatisée ainsi qu'un magasin automatisé, présentant une organisation spatiale et fonctionnelle destinée à automatiser les flux de matières entrants dans et sortants de ladite cellule (1), en vue d'accroître très significativement, dans une enceinte réduite, l'autonomie de fonctionnement de la cellule sans assistance humaine, ainsi que la flexibilité et la productivité de la cellule, ladite installation comportant au moins, en vue d'assurer différentes fonctions de ladite cellule : une presse-plieuse, un robot de pliage, un rail, généralement appelé « track », sur lequel se déplace un chariot supportant le robot, un système de dépose et de reprise des pièces en cours d'opération, un système de contrôle d'indexage de pièces à plier, mécanique ou optique, un magasin ou un ensemble d'étagères à outils de pliage, notamment des poinçons et des matrices, au moins un dispositif de fixation de préhenseurs, un système de programmation et de monitoring de la presse-plieuse, une console de commande, un magasin automatisé, une zone d'approvisionnement pour pièces à plier et une zone de dépose des pièces après pliage, le robot étant capable d'assurer les opérations successives de placer un ou plusieurs outils de pliage dans la presse-plieuse, de se connecter à un des préhenseurs disposés sur un des dispositifs de fixation, d'acheminer une pièce à plat dans la presse-plieuse à partir de la zone d'approvisionnement, d'effectuer toutes les manipulations nécessaires à la réalisation de différents pliages, en ce compris des opérations de dépose/reprise et de contrôle d'indexage, ladite installation industrielle étant caractérisée en ce que la cellule de pliage, le cas échéant avec sa zone d'approvisionnement et sa zone de dépose, est en communication avec le magasin automatisé, grâce à, en tout ou en partie , dans un périmètre restreint, un ensemble de moyens nécessaires pour garantir une autonomie de très longue durée sans assistance humaine, à savoir :
- des moyens entièrement automatisés pour acheminer des pièces à plier sur palette à partir du magasin automatisé vers un emplacement dédié de la cellule, via la zone d'approvisionnement ;
- des moyens entièrement automatisés pour évacuer des pièces pliées hors de la cellule et les stocker dans un endroit dédié du magasin automatisé, via la zone de dépose ;
- des moyens entièrement automatisés pour évacuer des palettes vidées de leur contenu hors de la cellule et les déplacer dans un endroit dédié du magasin automatisé ;
- des moyens entièrement automatisés pour acheminer dans la cellule, à un endroit dédié, des palettes vides en provenance du magasin automatisé et destinées à recevoir des pièces pliées ;
- une pluralité de dispositifs de rangement aptes à :
   - stocker, dans l'enceinte de la cellule, à des emplacements paramétrables, l'ensemble des outils de pliage nécessaires pour garantir l'autonomie de fonctionnement sans assistance de la cellule pendant une période de temps déterminée ;
   - stocker, dans l'enceinte de la cellule, à des emplacements paramétrables, l'ensemble des préhenseurs nécessaires à la manipulation de l'ensemble des pièces à plier et au fonctionnement autonome de la cellule pendant une période de temps déterminée ; et/ou
   - être utilisés comme moyens d'interface de palettisation et de déplacement qui sont soit acheminés dans la cellule, soit évacués de la cellule, par des moyens totalement automatisés et programmables ; et qui permettent d'accroître, dans les limites de la capacité de programmation des opérations, la présence d'une quantité d'éléments nécessaires à la réalisation d'opérations effectuées par le robot, lesdits éléments comprenant des outils de pliage standard, spéciaux ou réservés à l'usage exclusif d'un client, des organisateurs de commandes, des préhenseurs universels ou spécifiques, des accessoires conçus pour optimiser l'empilage de pièces pliées complexes et/ou la protection de pièces fragiles, des contenants pour la dépose en vrac de pièces de faible encombrement, des systèmes de palettisation destinés soit à l'approvisionnement de la cellule en pièces à plier, soit à la réception des pièces pliées, des systèmes de palettisation mixtes pour gérer sur une même interface de déplacement et de manière entièrement automatisée et programmable les pièces à plier, ces mêmes pièces après pliage et d'éventuels accessoires nécessaires aux opérations à réaliser sur ces pièces, cette solution étant particulièrement adaptée à des petites cellules équipées de presses-plieuses de 1m ou de 1,5m, sans exclure l'application de cette option pour des cellules équipées de presses-plieuses de plus grande taille, et/ou des outils standard ou spéciaux destinés au stockage dans le magasin automatisé et destinés au partage entre plusieurs cellules, de manière automatique et programmable, et ce afin d'éviter une démultiplication des coûts d'outillage.

Les moyens entièrement automatisés pour acheminer dans ou évacuer de la cellule des pièces ou palettes, dont il est question ci-dessus, peuvent comprendre par exemple des transstockeurs, des convoyeurs horizontaux ou verticaux à chaîne ou à courroie crantée, ou encore des robots de type AGV.

L'invention concerne également des formes d'exécution dont la portée est limitée par une des caractéristiques décrites dans les revendications secondaires 2-19 ou encore par une combinaison appropriée de plusieurs de ces caractéristiques.

Un autre aspect de l'invention se rapporte à une méthode de mise en œuvre d'une installation industrielle comprenant une cellule de pliage de tôles automatisée ainsi qu'un magasin automatisé, destinée à accroître l'autonomie de fonctionnement de la cellule sans assistance humaine, ainsi que sa flexibilité et sa productivité, selon les termes de la revendication 20.

La combinaison de l'acheminement automatique et de l'évacuation automatique, en relation avec un magasin automatisé linéaire constitue une des conditions indispensables, mais non la seule, permettant d'accroître sur une très longue durée, l'autonomie de fonctionnement sans assistance, d'une cellule de pliage robotisée.

Les solutions techniques à mettre en œuvre doivent prendre en compte la diversité des besoins des ateliers de tôlerie, la grande diversité de formes et de dimensions des pièces à fabriquer ainsi que de la taille des séries qui tend toujours à s'amenuiser davantage afin de répondre en flux tendu aux commandes des clients.

Les dimensions des pièces pliées sont dépendantes des caractéristiques de la machine et notamment de sa longueur et de son tonnage. Une presse-plieuse de 3m est potentiellement capable de plier des pièces jusqu'à 3m de longueur, mais cela implique que, pour pouvoir assurer une évacuation automatique de pièces de cette longueur, le système puisse manipuler des palettes de grande longueur tant pour acheminer les pièces à l'intérieur de la cellule que pour les évacuer de celle-ci. A l'opposé, une presse-plieuse d'1m sera forcément dédiée à la production de pièces plus petites.

En particulier, on sait qu'une fois pliée, la pièce devient plus encombrante et, si sa forme est en plus asymétrique, la superposition de plusieurs lits de pièces peut poser problème, notamment lorsque la pièce est longue et étroite. Il est d'usage très courant dans les ateliers de pliage d'utiliser des plaques intercalaires qui, une fois déposées sur un premier lit formé de pièces juxtaposées, permettent de créer un second lit de pièces, voire plusieurs. Dans une cellule dont tous les flux entrants et sortants sont automatisés en vue d'accroître significativement l'autonomie de fonctionnement sans assistance, il est donc important qu'un certain nombre d'équipements complémentaires, comme des intercalaires, puissent être acheminés automatiquement à l'intérieur de la cellule afin que le robot puisse disposer de ce qui lui est nécessaire pour accomplir son travail.

En outre, les solutions techniques à mettre en œuvre doivent permettre aux différentes fonctions de la cellule de pliage d'interagir avec le magasin automatisé afin de pouvoir disposer de tous les outils ou équipements permettant une autonomie de fonctionnement de longue durée. Cela sous-entend notamment que le magasin automatisé puisse apporter à la cellule, de manière automatisée, l'ensemble des équipements et outillages que requiert la réalisation d'une grande diversité de pièces.

Dans les solutions techniques décrites selon l'invention, la position des équipements complémentaires introduits dans la cellule est paramétrable afin de permettre la programmation des mouvements du robot.

Ces solutions techniques permettent en outre de partager, de manière automatisable, des équipements ou des outillages entre plusieurs cellules de pliage connectées à un même magasin automatisé et de réduire ainsi le coût que représenteraient ces équipements s'ils devaient être présents dans chaque cellule de pliage. Ces solutions permettent notamment un restockage des pièces pliées dans un magasin automatisé de grande capacité.

Ces solutions permettent également un dispatching entre les différents outils de production de l'atelier, tant en amont qu'en aval de la cellule de pliage et ce sans engendrer de croisement de flux au sein même de l'atelier et avec une emprise au sol extrêmement réduite à laquelle aucun autre système automatisé connu ne peut prétendre.

Toute autre solution, faisant partie de l'état de la technique, qui permettrait d'introduire des équipements complémentaires dans l'enceinte de la cellule, de manière automatisée, engendrerait davantage de manutention et complexifierait la gestion des flux à l'intérieur de l'atelier.

Outre la mutualisation d'outils partagés entre plusieurs cellules, les solutions proposées résolvent également le délicat problème que représente la mise à disposition effective de la cellule de tous les outils de pliage (poinçons et matrices) ou de préhension nécessaires pour garantir une très longue autonomie de fonctionnement sans assistance. Ainsi, les préhenseurs utilisés pour la manipulation de pièces de grandes dimensions ou les préhenseurs à faible fréquence d'usage pourraient avantageusement être stockés dans les tours du magasin automatisé.

Les points qui précèdent, démontrent que les fonctions *raw in, raw out* et *sharing* coopèrent en vue d'un résultat commun consistant en l'automatisation totale, sur une très longue période de temps, de l'ensemble des flux. Ces trois fonctions réunies constituent d'ailleurs une entité fonctionnelle à part entière, totalement inédite.

Toujours selon l'invention, en fonction de la dimension de la cellule et de la presse-plieuse, les fonctions *raw in, raw out* et *sharing* seront soit séparées et associées chacune à une connexion de la cellule avec le magasin, soit regroupées sur une seule et même connexion de la cellule au magasin.

Cet objectif correspond à une vive attente des nombreux utilisateurs de cellules de pliage qui ne trouvent dans l'état de l'art actuel que des solutions partielles à ce problème, certains flux étant automatisés et d'autres pas ou encore pour une période de travail au final trop limitée.

Une automatisation complète des flux entrants et sortants de la cellule permettrait notamment de résoudre le délicat problème des pauses de nuit ainsi que le problème encore plus délicat des pauses de week-end (samedi et dimanche).

### Brève description des figures

Des exemples de réalisation suivant l'état de la technique et suivant l'invention sont décrits par la suite avec plus de détails à l'aides des figures annexées.
La FIG. 1 représente une vue en perspective et une vue en plan d'une cellule de pliage de tôles robotisée selon l'état de la technique.
La FIG. 2 représente une première forme d'exécution d'une cellule de pliage de tôles automatisée selon la présente invention, avec une étagère à outils positionnée perpendiculairement par rapport au track.
La FIG. 3 représente une deuxième forme d'exécution d'une cellule de pliage de tôles automatisée selon la présente invention, avec des étagères coulissantes.
La FIG. 4 représente une troisième forme d'exécution d'une cellule de pliage de tôles automatisée selon la présente invention, avec une étagère coulissante parallèle à la presse-plieuse et munie d'une fenêtre d'accès à celle-ci.
La FIG. 5 représente une quatrième forme d'exécution d'une cellule de pliage de tôles automatisée selon la présente invention, avec un dédoublement de l'étagère de la FIG. 4.
La FIG. 6 représente une cinquième forme d'exécution d'une cellule de pliage de tôles automatisée selon la présente invention, avec plusieurs étagères juxtaposées parallèlement entre elles et dont la hauteur est inférieure à celle du tablier bas de la presse-plieuse.
Les FIG. 7A-7C représente une sixième forme d'exécution d'une cellule de pliage de tôles automatisée selon la présente invention, où les étagères sont doublées et rotatives.
La FIG. 8 représente une autre forme d'exécution d'une cellule de pliage de tôles automatisée selon la présente invention, dans laquelle la cellule est approvisionnée automatiquement en pièce à plier à partir du magasin automatisé.
Les FIG. 9A-9B représentent une autre forme d'exécution d'une cellule de pliage de tôles automatisée selon la présente invention, dans laquelle il y a à la fois un approvisionnement automatique en pièce à plier et une évacuation automatique des pièces pliées, via le magasin automatisé.
Les FIG. 10A-10B représentent une autre forme d'exécution d'une cellule de pliage de tôles automatisée selon la présente invention, dans laquelle la solution précédente est complétée par le coulage d'un système de partage d'outils/préhenseurs avec le magasin automatisé.
La FIG. 11 représente une autre forme d'exécution d'une cellule de pliage de tôles automatisée selon la présente invention, dans laquelle le *raw in* et le *raw out* sont combinés sur une seule et même palette.
Les FIG. 12-13 représentent chacune une forme d'exécution globale et complète d'une cellule de pliage de tôles automatisée selon la présente invention, dans laquelle le repérage des pièces est effectué par caméra.
Les FIG. 14-15 représentent chacune une forme d'exécution globale et complète d'une cellule de pliage de tôles automatisée selon la présente invention, dans laquelle on utilise un cadre de repositionnement des pièces.
Les FIG. 16A-16D illustrent selon une vue en élévation et une vue en plan quatre variantes pour une cellule compacte associée à un magasin automatisé via un système de palettisation mixte ou non. On entend généralement par palettisation une mise sur palettes de marchandises ou une organisation basée sur l'emploi de palettes. Un système de palettisation peut donc être tout moyen permettant ou remplaçant l'utilisation de palettes (plaques de support, robots mobiles, etc.).

Dans la description qui suit, des éléments similaires dans les illustrations sont affectés dans la mesure du possible de repères numériques identiques. Toutes les dimensions décrites ou suggérées ici ne sont pas destinées à limiter la portée de l'invention, laquelle peut s'écarter de ces dimensions De même, le design spécifique des composants suggéré dans les illustrations n'est nullement limitatif de l'invention.

### Description détaillée de formes d'exécution de l'état de la technique

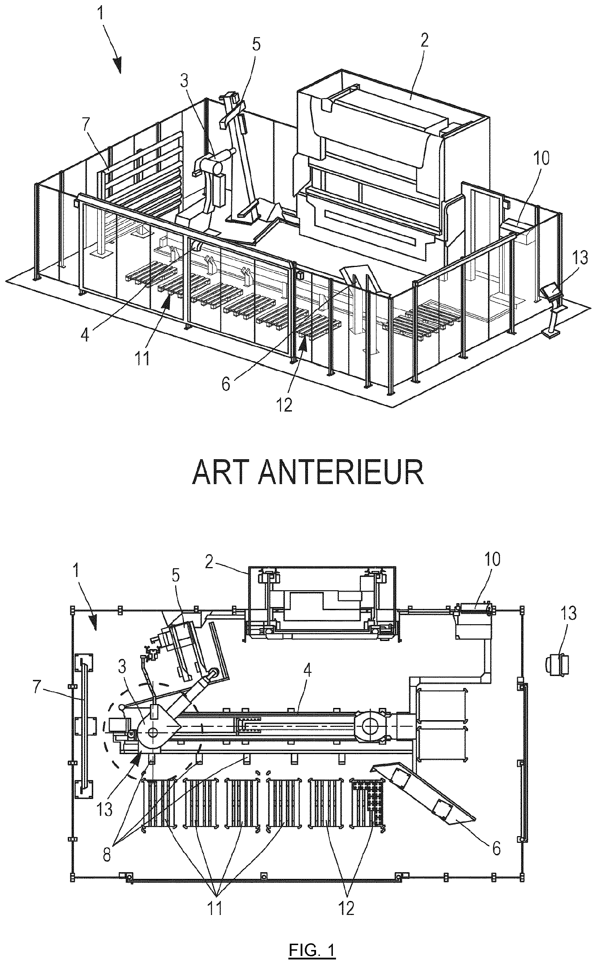

La plupart des cellules de pliage robotisées 1 se ressemblent et sont composées des mêmes fonctions ou de fonctions similaires, comme représenté sur la FIG. 1 :
- une machine de pliage constituée généralement par une presse-plieuse 2 assortie d'un système censé garantir la précision de l'angle de pliage sur toute la longueur du pli ; les ateliers de tôlerie, y compris les ateliers robotisés, sont généralement équipés de plusieurs presses-plieuses selon le gabarit des pièces à produire ;
- un robot 3 étudié pour s'adapter à toutes les positions requises par le façonnage des pièces et comportant un nombre d'axes lui permettant d'atteindre les fonctions disposées sur tout le périmètre de la cellule. Les caractéristiques techniques du robot répondent à la même logique que celle qui prévaut pour les presses-plieuses. Les pièces lourdes et encombrantes nécessiteront un robot conçu pour manipuler des charges lourdes et doté d'une grande amplitude de mouvement. A l'inverse une petite cellule de pliage utilisera un robot plus petit et plus agile, capable d'une grande vitesse d'exécution et dimensionnellement adapté à la compacité des dimensions de la cellule ;
- un axe de translation linéaire 4, généralement désigné par le terme « track » et permettant au robot 3 de couvrir une large zone de travail et d'atteindre les différentes fonctions disposées dans son champ d'action. Le « track » peut -être posé au sol ou fixé à une paroi ou encore suspendu à une structure portante. Le mode de positionnement du « track » sera également en relation avec le gabarit de la presse-plieuse et du robot, un « track » posé au sol étant plus adapté aux machines de grand gabarit et un « track » suspendu étant plus adapté aux machines de petit gabarit ;
- un espace dédié à l'approvisionnement de la cellule en pièces à plier (*raw in*) 11. Cet espace peut-être simplement constitué d'une surface de dépose plus ou moins grande destinée à recevoir un nombre variable de palettes de pièces à plier (pièces à plat). La logique des gabarits de machines développées dans les points précédents est valable également pour cette fonction de la cellule ;
- un espace dédié à la dépose des pièces après façonnage (*raw out*) 12. La logique des gabarits de machine développées dans les points précédents est valable également pour cette fonction de la cellule. De surcroît, comme les pièces pliées occupent un volume beaucoup plus important que les pièces à plat, c'est la raison pour laquelle certaines cellules sont parfois dotées d'un ou plusieurs convoyeurs à rouleaux permettant de réduire la fréquence des interventions du manutentionnaire chargé de l'évacuation des palettes de pièces pliées ;
- un magasin 7 dédié aux outils de pliage (c'est-à-dire les poinçons et matrices). La capacité de stockage des magasins d'outils est limitée et varie entre 30 et 160 mètres linéaires supportant poinçons et matrices. Le magasin d'outils peut être constitué d'une simple étagère à outils et c'est le robot de pliage qui effectue, à l'aide d'un préhenseur adapté, le montage et le démontage des outils. Certaines cellules sont équipées d'un magasin d'outils automatisé où des automates auxiliaires procèdent au montage et au démontage des outils, le robot principal étant inactif durant ces opérations. La fréquence des changements d'outils est directement liée à la taille des séries. De petites séries impliquent des changements d'outils très fréquents. C'est la raison pour laquelle les magasins d'outils sont généralement positionnés à côté de la presse-plieuse ou intégrés à celle-ci. La problématique du pliage est complexe dans la mesure où elle doit répondre à un grand nombre de contraintes liées à la fois à la grande diversité et aux spécificités des pièces à fabriquer. On remarquera cependant que :
   - la grande majorité des pliages sont réalisables à partir d'outils standards mais certains pliages nécessitent des outils spéciaux ;
   - des combinaisons d'outils doivent souvent être envisagées. Il s'agit le plus souvent de combinaisons d'outils standards mais des combinaisons d'outils standards et d'outils spéciaux doivent parfois être envisagés également ;
   - la majorité des outils est utilisable sur les différents gabarits de machines ;
   - la fréquence d'utilisation des outils standards est extrêmement variable, certains étant utilisés très couramment et d'autres plus rarement ;
   - certains outils spéciaux sont réservés à l'usage exclusif des clients qui en ont supporté le coût de fabrication ;
- un magasin dédié aux outils de préhension 8, constitués de préhenseurs 9 à ventouses, à pinces ou encore magnétiques. Le nombre de préhenseurs nécessaires pour assurer le fonctionnement automatique de la cellule varie fortement en fonction :
   - de la diversité de formes et de dimensions des pièces à fabriquer ;
   - de la taille des séries ;
   - de l'autonomie de fonctionnement souhaitée.
   Dans un scénario où la cellule produirait des centaines de pièces identiques par jour, un seul préhenseur serait théoriquement nécessaire. Ce scénario irait cependant à l'encontre du mode de fonctionnement vers lequel évoluent la plupart des ateliers de production et de leurs donneurs d'ordres, qui misent toujours d'avantage sur une production en flux tendu, voire sur une production de type QRM (*Quick Response Manufacturing*) où les produits sont fabriqués dans l'ordre des commandes et parfois à la pièce._Dans ces conditions, il n'est pas rare que le robot doive utiliser, sur une seule pause de travail de 8h, jusqu'à 10 préhenseurs différents voire d'avantage si l'atelier fonctionne en mode QRM.
   L'évolution vers le 4.0 conduit à requérir des productions en mode totalement automatisé et pratiquement ininterrompues, y compris les week-ends, soit avec 6 pauses de 8 heures consécutives. Cette tendance lourde implique, pour une cellule de pliage dont l'ensemble des flux entrants et sortants de la cellule seraient automatisés, que le robot puisse avoir accès, dans l'enceinte de la cellule, à un minimum de 30 à 40 préhenseurs ;
- un cadre de référencement angulaire 6 des pièces à plier, parfois appelé table de centrage. Cette fonction est parfois remplacée par un système optique (caméra) placé sur la tête du robot et permettant à celui-ci de corriger automatiquement l'angle de préhension ;
- un système de contrôle d'épaisseur permettant de vérifier que deux pièces ne sont pas collées l'une à l'autre et risqueraient de ce fait d'endommager les outils de pliage (non représenté). Le système de contrôle d'épaisseur est parfois associé au cadre de référencement angulaire afin de réunir en une seule étape les deux opérations ;
- un dispositif de repositionnement de la pièce en cours de pliage 5 permettant de déposer la pièce en vue d'un changement de préhenseur durant la phase de pliage ou encore pour permettre un changement de position du préhenseur. Ce système de dépose est généralement constitué de deux bras parallèles équipés de ventouses et dont l'écartement peut varier, l'écartement des bras étant programmable en fonction des dimensions de la pièce. Le système de repositionnement est généralement implanté dans le périmètre du rayon d'action du robot lorsque le robot se trouve face à la presse-plieuse ;
- un système de programmation et de monitoring 10 de la presse-plieuse ;
- une console de commande 13.

Les formes d'exécution préférées de l'invention se basent sur l'amélioration d'une solution standard actuelle et de ses fonctions, comme par exemple la cellule de pliage robotisée proposée par la firme Bystronic (4922 Thunstetten, Suisse) mais de manière nullement limitative ou contraignante, dans la mesure où la plupart des fabricants proposent les mêmes fonctions pour ce type de cellule. On fera référence à cette cellule par la suite comme étant la « cellule standard ». C'est ce type de cellule qui est représenté sur la FIG. 1.

### Description détaillée de l'invention

Atteindre les 4 principaux objectifs cités ci-dessus suppose d'avoir identifié et résolu les multiples problèmes qui constituent aujourd'hui autant de barrières à l'efficacité globale d'une cellule de pliage.
A ce problème global, il ne peut y avoir qu'une réponse globale. Si une seule des conditions garantes du niveau d'autonomie visé est absente, elle mettra inévitablement à mal l'objectif principal dans sa globalité.

Cette réponse globale résulte d'une combinaison inédite selon l'invention de fonctions techniques connues, utilisées par tous les fabricants de machines de tôlerie en général et de cellules de pliage robotisées en particulier.

Parmi ces fonctions techniques connues et concernées par l'invention, on peut citer notamment : les presses-plieuses, les robots, les tracks, les magasins automatisés et les différents asservissements dont ils sont constitués, les AGV (pour *Automatic Guided Vehicles,* ces robots qui se déplacent de façon autonome sans intervention humaine, grâce à une technique de guidage quelconque), les systèmes de reconnaissance optique ou mécanique, les systèmes de retournement ou de reprise des pièces en cours de process (*regrip*), les magasins à outils de pliage, automatisés ou non, les systèmes de préhension des pièces manipulées par le robot, les systèmes de contrôle d'épaisseur, etc.

De l'analyse par les inventeurs de ces multiples fonctions et de leurs interactions, il ressort que seul les liens évidents ont été exploités dans l'art antérieur alors que d'autres synergies fonctionnelles majeures ont été négligées.

Les solutions proposées dans la présente demande sont liées à de nouveaux principes d'organisation spatiale des fonctions de la cellule rendus possibles par la conception d'un programme d'éléments d'asservissement inédits et exclusivement dédiés à l'atteinte des objectifs poursuivis.

### Description de formes d'exécution préférées de l'invention

Dans le cadre de l'autonomie de fonctionnement d'une cellule de pliage sans assistance humaine, un premier objectif technique est d'assurer la disponibilité des outils nécessaires pour garantir une très longue autonomie de la cellule (voir « objectifs conceptuels » ci-dessus).

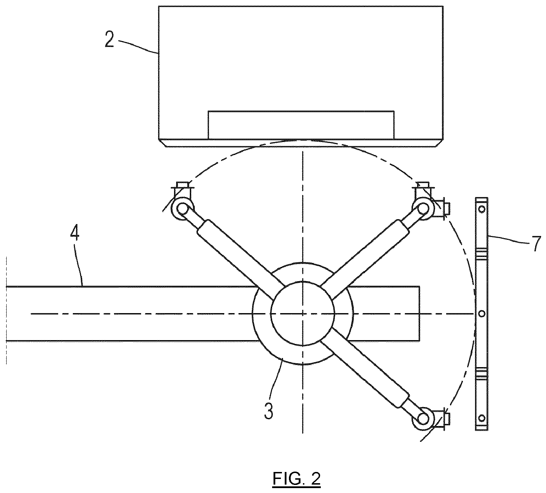

Selon une première forme d'exécution préférée représentée sur la FIG. 2, la presse-plieuse 2 est décentrée par rapport au track 4 (ou déplacée par rapport à la configuration actuelle de la cellule standard) et l'étagère à outils 7 est positionnée perpendiculairement au track. Cette implantation permet au robot de se positionner de manière à ce que son axe de rotation vertical soit équidistant de l'étagère à outils et de la presse-plieuse. Une simple rotation de 90° permet au robot de se trouver alternativement face à l'étagère ou face à la presse-plieuse.

Les avantages de la solution sont les suivants :
- le temps de montage et de démontage des outils est ainsi fortement réduit. Le gain de temps estimé, par rapport à la cellule standard actuelle, est de 50 à 60% ;
- simplicité de la solution et coût dérisoire, à efficacité comparable, par rapport aux solutions concurrentes particulièrement complexes n'utilisant pas le robot et où le robot est inactif pendant le chargement des outils.
- outre le gain de productivité qu'elle procure, cette réduction des temps de changement d'outils, augmente la flexibilité de la cellule et la rend plus compatible avec des petites séries de pièces à plier.

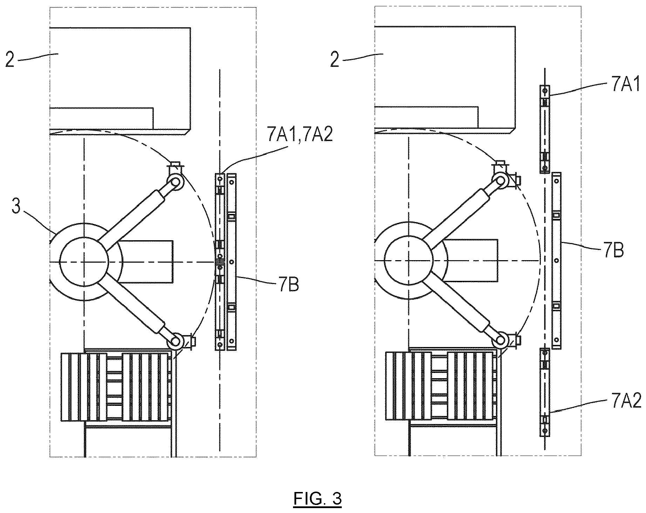

En variante, selon une deuxième forme d'exécution préférée représentée sur la FIG. 3, on a une solution qui se distingue de la précédente par le fait qu'elle comporte deux étagères juxtaposées 7A, 7B parallèlement entre elles. L'étagère située à l'avant-plan 7A par rapport au track 4 est divisée en deux éléments 7A1 et 7A2. Ces deux éléments sont montés sur un rail de roulement 70 posé au sol et sont guidés par un rail de guidage en leur partie supérieure (non représenté). Les deux éléments 7A1 et 7A2 sont mobiles et peuvent se déplacer vers l'intérieur ou l'extérieur sur le rail par un moyen mécanique quelconque (motorisé ou non) afin de permettre au robot d'accéder aux outils de l'étagère située à l'arrière-plan. Une solution comportant plus de deux plans d'étagères est également envisageable.

Les avantages de cette deuxième solution sont les suivants :
- cette solution permet de garantir une très longue autonomie de la cellule sans nécessiter l'intervention d'un opérateur ;
- chaque plan d'étagères permettrait de stocker une grande quantité d'outils (par exemple 50m pour des étagères de 3m de hauteur) ;
- deux plans d'étagères permettraient de loger un stock d'outils comparable par exemple à la solution TOOL MASTER de TRUMPF (100 m) ;
- la solution se distingue des systèmes de chargement automatique concurrents par sa grande simplicité ;
- la solution est modulable et s'adapte aux besoins du client ;
- cette solution est plus complexe que la proposition 1 en raison des glissières nécessaires mais toujours infiniment plus simple que les systèmes de chargement/déchargement automatiques concurrents.
- la compétitivité de la solution.

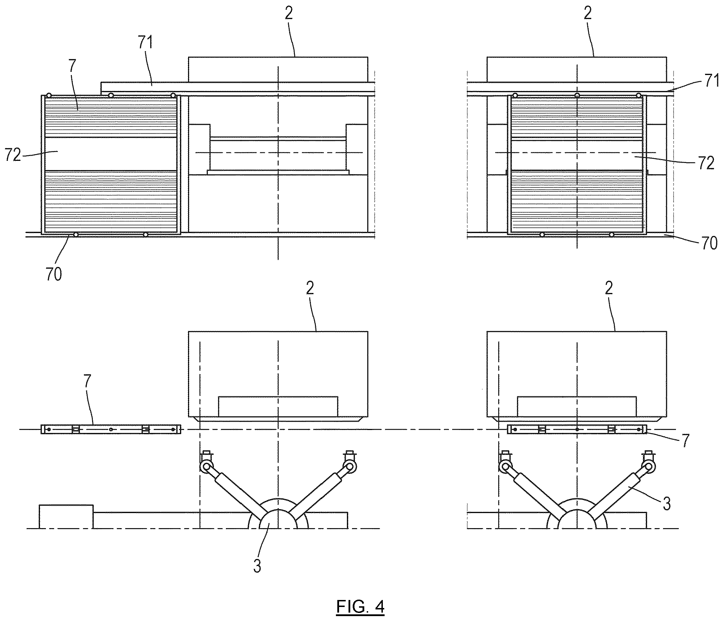

Selon une troisième forme d'exécution préférée représentée sur la FIG. 4, l'étagère à outils 7 est positionnée dans un plan parallèle au plan de la face avant de la presse-plieuse 2.

L'étagère à outils 7 est montée sur un rail de roulement 70 posé au sol et est guidée par un rail de guidage 71 en sa partie supérieure. L'étagère 7 est mobile et peut être déplacée par un moyen mécanique quelconque (avec ou sans motorisation) afin de se positionner en vis-à-vis de la presse-plieuse 2, parallèlement aux tabliers de la machine. L'étagère 7 est pourvue d'une fenêtre 72 permettant de donner accès aux rainures de fixation des poinçons et matrices (non représenté) sur la presse-plieuse 2.

Les avantages de cette troisième solution sont les suivants :
- cette solution permet de réduire encore davantage l'amplitude des mouvements du robot 3 et par la même occasion les temps de chargement/déchargement des outils ;
- par rapport à la solution standard actuelle de BYSTRONIC, la réduction des temps de set up serait de l'ordre des 70% ;
- la compatibilité de la cellule avec la production de petites séries est encore renforcée.

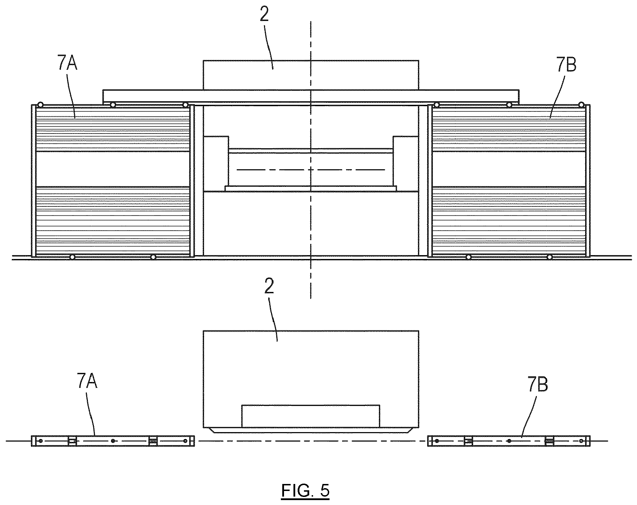

En variante de la troisième forme d'exécution préférée, selon une quatrième forme d'exécution préférée représentée sur la FIG. 5, on a un dédoublement des étagères 7A, 7B et un positionnement de celles-ci à gauche et à droite de la machine respectivement. Les étagères 7A, 7B sont toutes deux mobiles comme indiqué ci-dessus pour permettre leur déplacement en vis-à-vis de la presse-plieuse 2.

Les avantages de cette quatrième solution sont les suivants :
- cette solution permet de garantir une très longue autonomie de la cellule sans nécessiter l'intervention d'un opérateur ;
- pour le reste, mêmes avantages que proposition N°3.

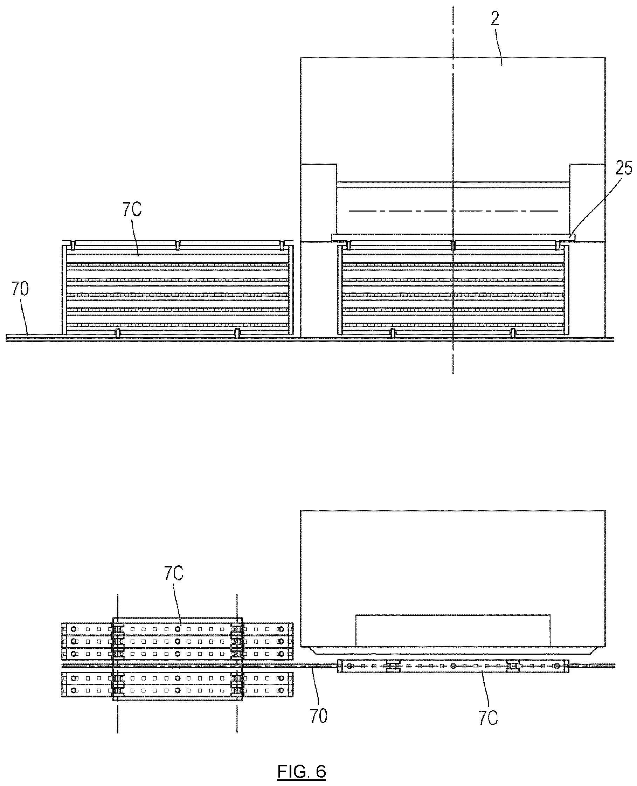

En variante de la troisième forme d'exécution préférée, selon une cinquième forme d'exécution préférée représentée sur la FIG.6, le système se distingue de la proposition N°3 par le fait qu'elle comporte plusieurs étagères 7C juxtaposées parallèlement entre elles et dont la hauteur est inférieure à celle du tablier bas 25 de la presse plieuse 2.

Les étagères 7C sont entourées d'une structure portante pourvue d'un dispositif permettant de positionner chacune d'elle en vis-à-vis d'un chemin de roulement 70 parallèle au tablier inférieur 25 de la presse-plieuse 2.

Les avantages de cette cinquième solution sont les suivants :
- grande capacité de stockage ;
- temps de montage/démontage des outils réduit d'environ 60 % par rapport à la solution standard.

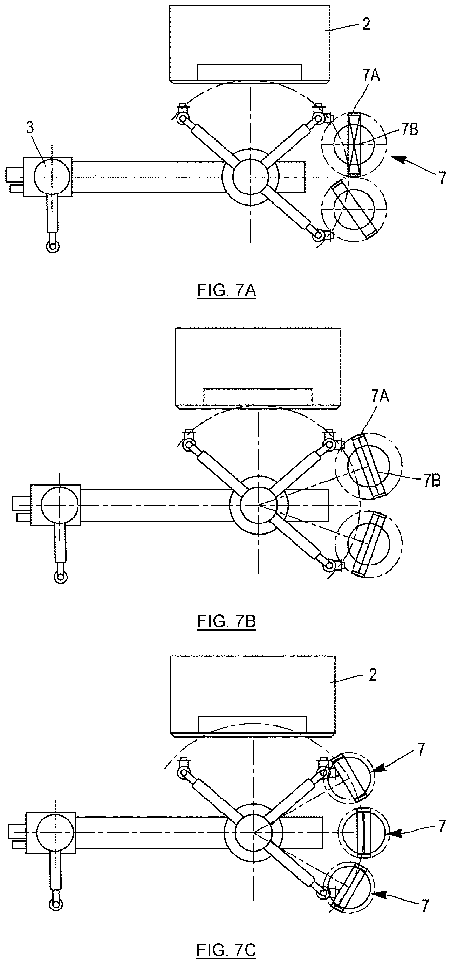

Selon une sixième forme d'exécution préférée représentée sur la FIG. 7A, comme dans la proposition N°2, le système est composé de deux étagères 7 juxtaposées. Chaque étagère est équipée d'outils sur ses deux faces 7A, 7B. Les étagères sont posées sur une base permettant leur rotation à 180°. Les outils des deux faces de l'étagère sont ainsi rendus accessibles au robot. La rotation des étagères est motorisée et pilotée par le logiciel de la cellule en fonction des outils appelés par le programme de pliage. Chaque étagère a par exemple une capacité de stockage de 40 m.

Les avantages de cette sixième solution sont les suivants :
- comme dans la proposition N°1, le temps de montage/démontage des outils est réduit de 50 à 60 % par rapport à la cellule standard actuelle ;
- simplicité de la solution et coût dérisoire, à efficacité comparable, par rapport aux solutions concurrentes particulièrement complexes et où le robot est inactif pendant le chargement des outils ;
- cette réduction des temps de changement d'outils, outre le gain de productivité qu'elle procure, augmente la flexibilité de la cellule et la rend plus compatible avec des petites séries de pièces à plier ;
- la capacité de stockage est par exemple de l'ordre de 80 m ;
- la mécanique de rotation semble plus simple à gérer que la mécanique de translation.

En variante de la sixième forme d'exécution préférée, selon une septième forme d'exécution préférée représentée sur la FIG. 7B, l'angle d'inclinaison des étagères permet d'optimiser les mouvements du robot.

En variante de la sixième forme d'exécution préférée, selon une huitième forme d'exécution préférée représentée sur la FIG. 7C, on a une configuration avec trois étagères de 1m de largeur par exemple et le robot est presque équidistant de tous les outils, ce qui permet grandement de réduire l'amplitude des mouvements du robot.

En variantes encore particulièrement avantageuses, les étagères doubles rotatives des FIG. 7A à 7C peuvent être généralisées à des blocs d'étagères rotatifs se présentant sous la forme de prismes droits à N faces verticales (N = 3, 4, 5, 6, etc.). Par exemple, dans le cas de trois faces, la capacité en nombre d'outils augmente de 50%. L'avantage de ces configurations compactes est de fournir beaucoup de possibilités dans un espace restreint.

L'avantage de cette huitième solution est en particulier la possibilité de coupler des fonctions différentes sur une même étagère, comme par exemples des outils de pliage sur une face, des préhenseurs sur l'autre ou un système « regrip » sur une face et un contrôle d'épaisseur sur l'autre, etc.

Toujours dans le cadre de l'autonomie de fonctionnement d'une cellule de pliage sans assistance humaine, un deuxième objectif technique est la maximisation du nombre de préhenseurs disponibles dans la cellule. A cet égard, toutes les considérations ci-dessus concernant les magasins à outils de pliage sont bien entendu valables pour le stockage des préhenseurs.

Pour atteindre le double objectif qui consiste à rendre la cellule totalement autonome pendant 6 pauses de travail consécutives, tout en autorisant des petites séries de pièces et donc des changements de préhenseur plus fréquents, les inventeurs ont estimé que le nombre de préhenseurs à prévoir devrait être compris entre 30 et 40 pièces.

Toujours dans le cadre de l'autonomie de fonctionnement sans assistance humaine, un troisième objectif technique est enfin la connexion automatisée de la cellule au magasin automatisé.

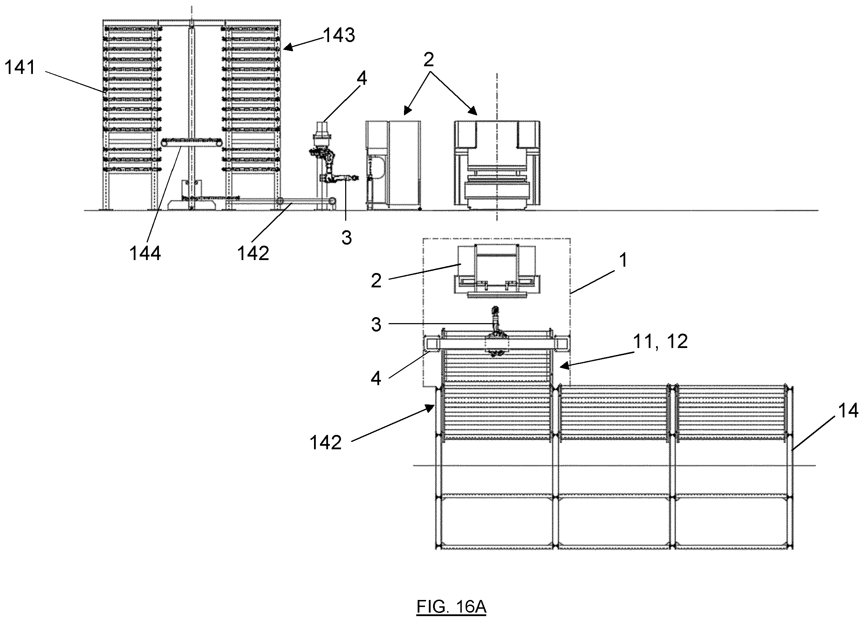

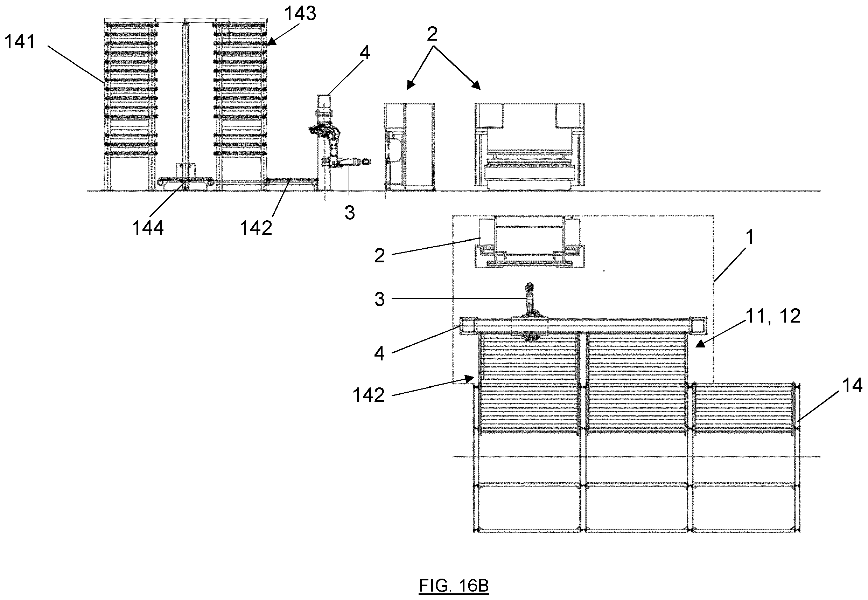

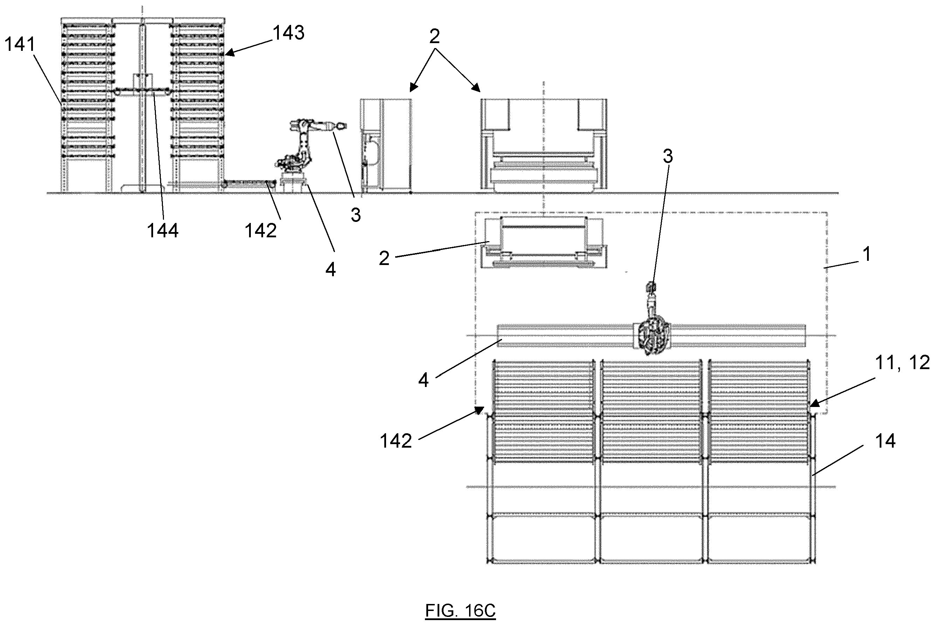

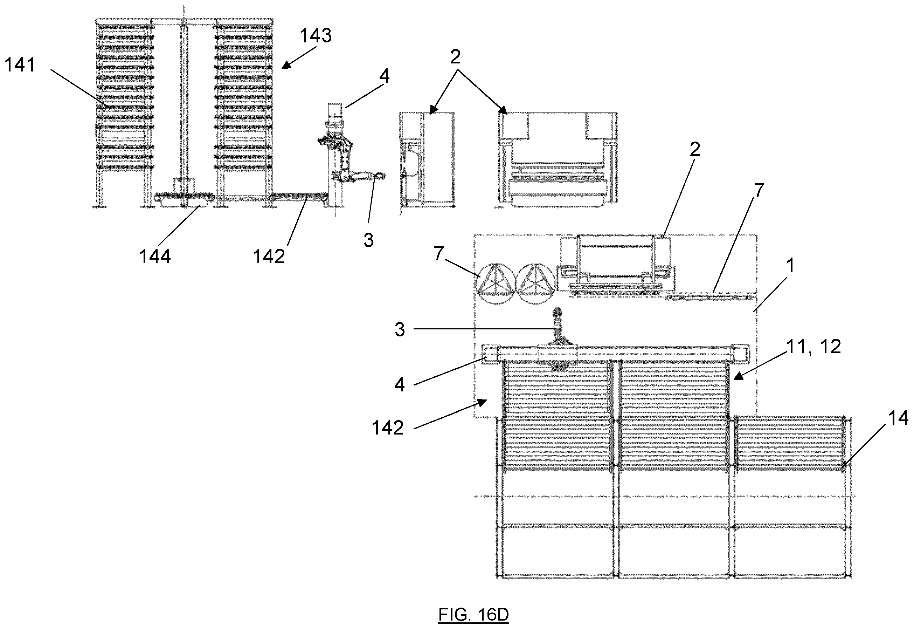

On entend par magasin automatisé (linéaire) un système de stockage automatisé comportant des espaces de rangement disposés le long d'allées au sol et/ou en hauteur. Le magasin automatisé est en fait composé de tours de stockage (voir par exemple FIG. 16, repère 143) juxtaposées et disposées en ligne sur une longueur variable en relation avec les dimensions de l'atelier et avec le nombre de machines connectées au magasin. Le magasin peut comporter généralement deux rangées de tours parallèles. Chaque tour peut accueillir un certain nombre de palettes 141, le nombre total de ces palettes dépendant de la hauteur des tours. Les palettes standardisées du magasin automatisé peuvent servir de support à d'autres formes de palettisation, telles que des euro-palettes. Les palettes sont équipées de crochets permettant leur extraction par différents dispositifs situés soit du côté de la face interne des tours, soit du côté de leur face externe. Un dispositif généralement appelé transstockeur 144 se déplace longitudinalement le long des tours sur toute la longueur du magasin. De plus, le transstockeur est pourvu d'un système de convoyage à chaîne pouvant se déplacer verticalement sur toute la hauteur des tours et permettant d'extraire les palettes en vue de leur déplacement vers un autre logement du magasin. La combinaison des déplacements verticaux et horizontaux permet au transstockeur d'accéder à l'ensemble des logements de palettes que comporte le magasin et de distribuer les palettes d'un logement à un autre, à n'importe quel endroit du magasin. D'autres fonctions standards des magasins automatisés peuvent être implantées en périphérie de la face externe des tours du magasin afin de permettre l'introduction de palettes dans le magasin ou, à l'inverse, d'extraire des palettes afin d'alimenter les machines et postes de travail implantés en périphérie du magasin.

De manière plus générale, les entrées et sorties de matériel du magasin automatisé sont effectuées par tout engin dont la coordination des mouvements et le guidage sont réalisés par un logiciel de gestion. Ces engins peuvent être par exemple non seulement des transstockeurs, mais aussi des convoyeurs, des portiques, des carrousels, etc. qui peuvent déplacer des pièces, des palettes, des plateaux, des caisses, etc. Dans le cas présent, le matériel stocké peut être constitué de longueurs de tôles à plat, de pièces pliées, de palettes comprenant des préhenseurs, des outils de pliage ou des intercalaires, de boîtes de rangement pour pièces finies de faible encombrement, etc.

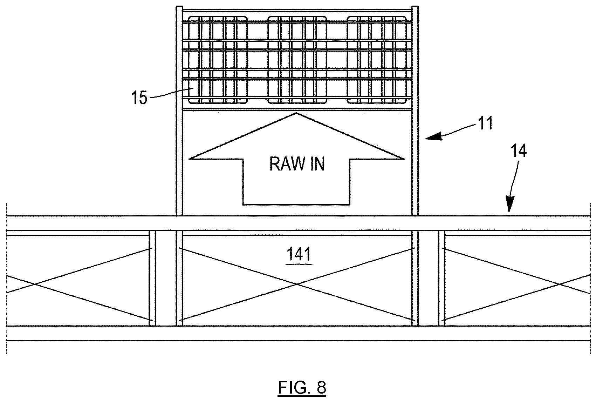

Selon une première forme d'exécution préférée, représentée sur la FIG. 8, la solution consiste en un approvisionnement automatique de la cellule en pièces à plier (dans une zone spécifique 11 dite de *raw in*). L'approvisionnement est effectué à partir des tours 141 du magasin automatisé 14, généralement sur des palettes de dépose de pièces entrantes 15.

Si la connexion directe des machines de découpe au magasin automatisé est proposée depuis longtemps par un grand nombre de constructeurs de machines, la connexion d'une cellule de pliage au magasin n'est apparue que très récemment chez le fabricant TRUMPF.

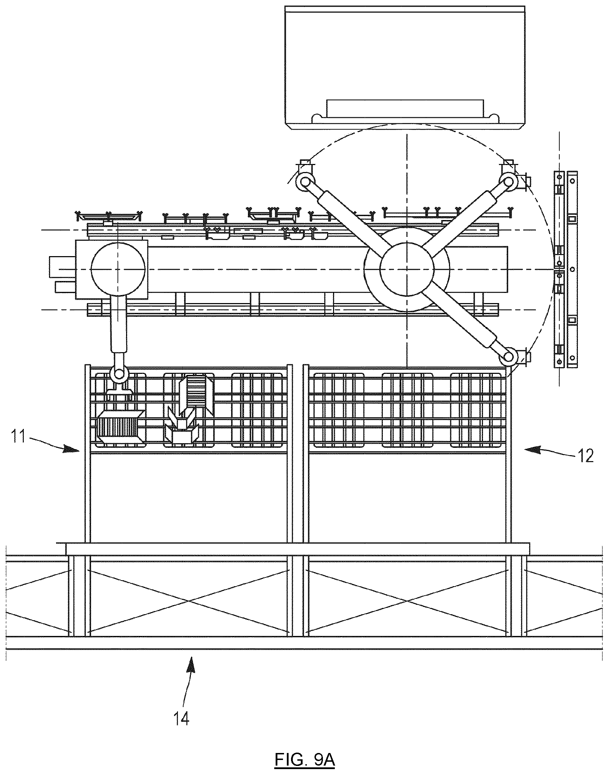

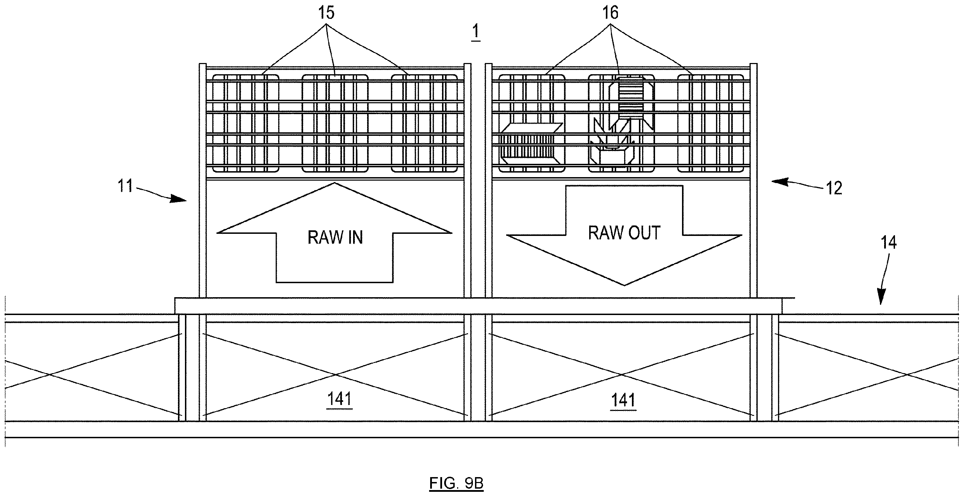

Selon une deuxième forme d'exécution préférée, représentée sur les FIG. 9A et 9B, la solution consiste, à côté de l'approvisionnement en tôles précité à partir du magasin automatisé 14 dans la zone de *raw in* 11, en une évacuation automatique des pièces pliées vers le magasin automatisé 14, à partir de palettes 16 située dans la zone de dépose des pièces pliées (dite de *raw out*) 12, en vue de leur stockage ou de leur dispatching vers un autre poste de l'atelier.

Cette solution est avantageuse dans la mesure où l'évacuation automatique des pièces pliées constitue une des clés essentielles pour atteindre l'objectif général de départ, à savoir maximaliser l'autonomie de fonctionnement sans assistance d'un opérateur.

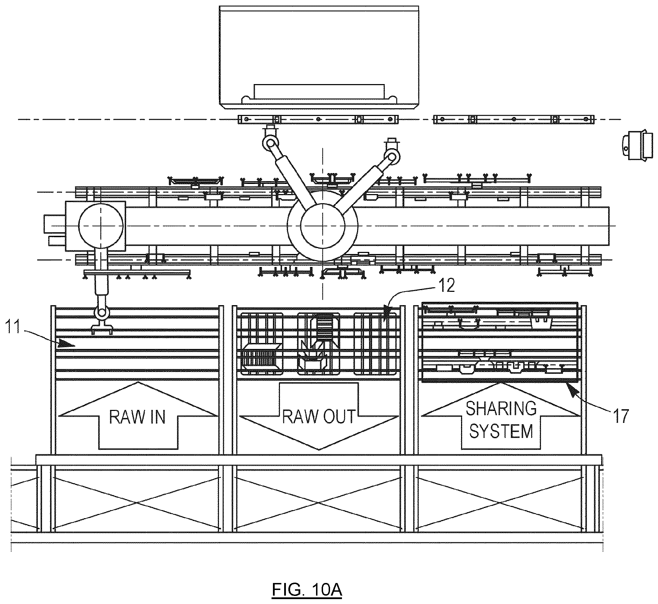

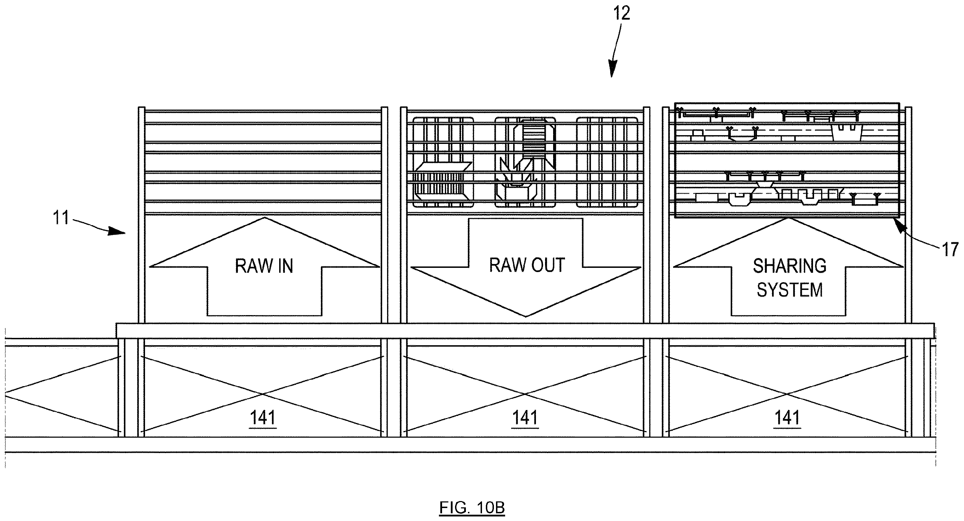

Selon une troisième forme d'exécution préférée, représentée sur les FIG. 10A et 10B, la solution consiste à coupler au magasin automatisé 14 un système de partage d'outils et de préhenseurs 17 qui vient également en interface avec la cellule, tout comme le *raw in* et le *raw out* (*Tools* & *Grippers Sharing System).*

La connexion directe de la cellule de pliage 1 au magasin automatisé 14 pourrait trouver un avantage technique particulièrement intéressant dans le fait de permettre un partage entre plusieurs cellules 1, connectées au magasin 14 des outils de pliage et des préhenseurs.

Dans ce cas de figure, au moins trois tours de stockage 141 équipées d'un système de transfert seraient nécessaires.

Les avantages de cette solution sont :
- la quantité de préhenseurs utilisables en mode automatisé serait alors pratiquement illimitée ;
- l'apport de nouveaux préhenseurs dans la cellule pourrait se faire sans l'aide d'un opérateur ;
- les préhenseurs, respectivement les outils, dédiés à un client ou à un produit spécifique pourraient être partagés entre plusieurs cellules et gérés en fonction de la charge de travail de chaque machine ;
- par rapport à la solution où chaque cellule est pourvue de tous les outils dont elle pourrait avoir besoin, cette solution permet de limiter le stock d'outils nécessaires et donc de réduire le coût du matériel immobilisé. Cette remarque est valable tant pour les outils de pliage que pour les préhenseurs et autres accessoires liés à l'empilage ou au « dropping » des pièces pliées.

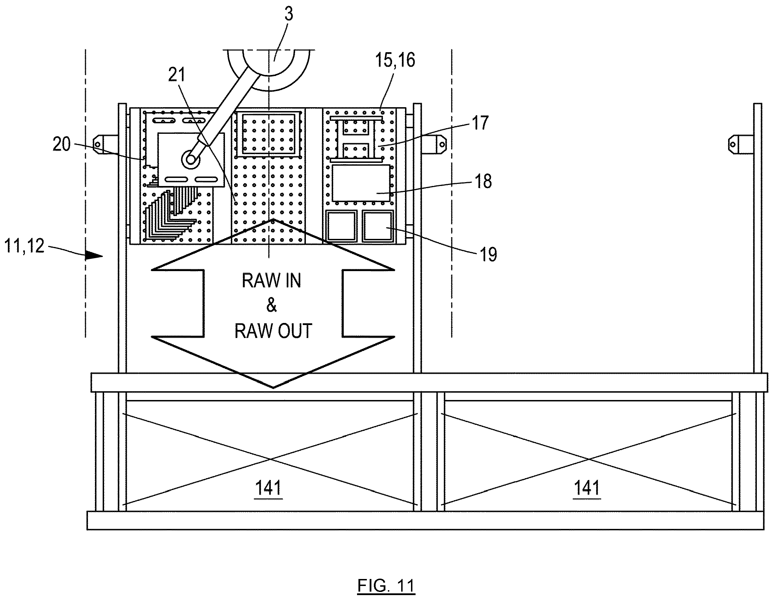

Selon une quatrième forme d'exécution préférée, représentée sur la FIG. 11, la solution consiste en une combinaison de *raw in* et *raw out* sur une seule et même palette 15, 16. Cette solution est particulièrement avantageuse pour les mini-cellules où la presse-plieuse est de petit gabarit (1 - 1,5 m).

Si la proposition précédente consistait à gérer de manière séparée les flux entre la cellule 1 et le magasin automatisé 14, la présente proposition consiste à regrouper sur une seule et même palette 15, 16 les différents éléments à introduire dans la cellule et à évacuer de la cellule.

Dans l'exemple illustré ci-dessus, un convoyeur à chaîne apporte à la cellule tout ce qui lui est nécessaire en vue de la réalisation d'une tâche donnée : les pièces à plier 20, une « surface » de dépose pour les pièces pliées 21 ou des contenants de type « drop box » 19, les outils spécifiques 17 requis pour le pliage ou la préhension des pièces, des intercalaires 18 pour l'empilement en couches des pièces pliées, etc.

Avantageusement, les préhenseurs seront disposés à plat dans le magasin automatisé et verticalement sur les étagères de la cellule.

Les apports techniques de la solution sont les suivants :
- la palette introduite dans la cellule est préparée suivant un plan précis et paramétré de telle sorte que le robot puisse identifier, avec le niveau de précision requis, la position des éléments qu'il aura à manipuler ;
- cette solution serait particulièrement adaptée aux micro-cellules qui pour les mêmes raisons que les grandes cellules gagneraient à être connectées au magasin automatisé ;
- cette solution où les palettes sont « plurifonctionnelles » plutôt que « spécialisées » serait également d'un grand intérêt pour les grandes cellules lorsque la flexibilité nécessaire aux petites séries est requise ;
- grâce à cette solution, la flexibilité n'est plus l'apanage des presses-plieuses servies par un opérateur ;
- la polyvalence des cellules de pliage automatisées rejoint les attentes du marché.

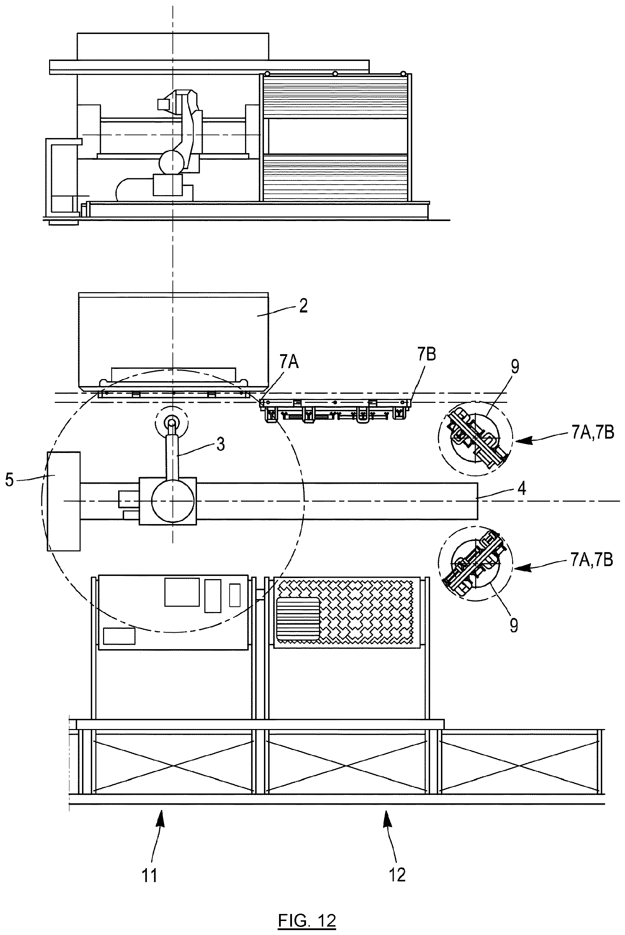

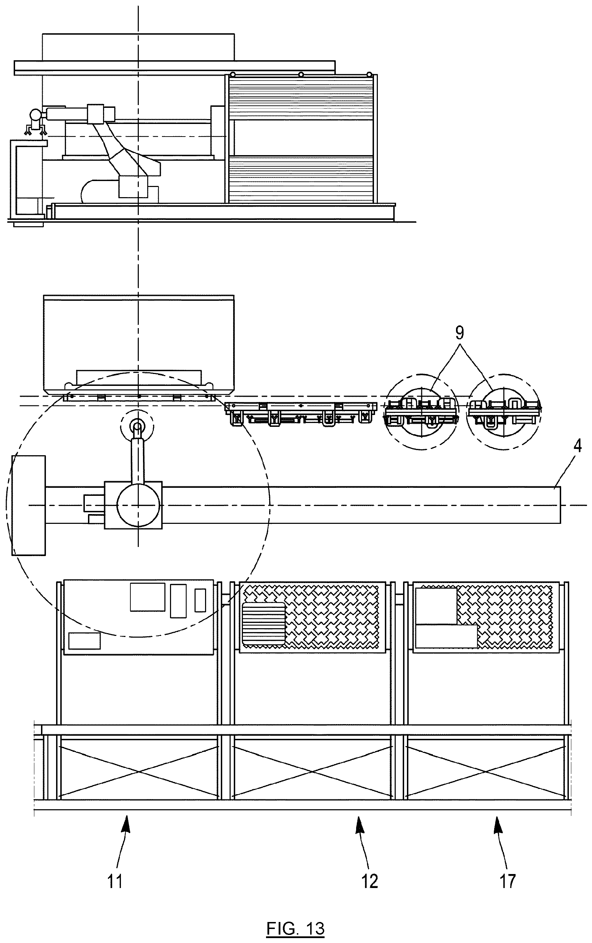

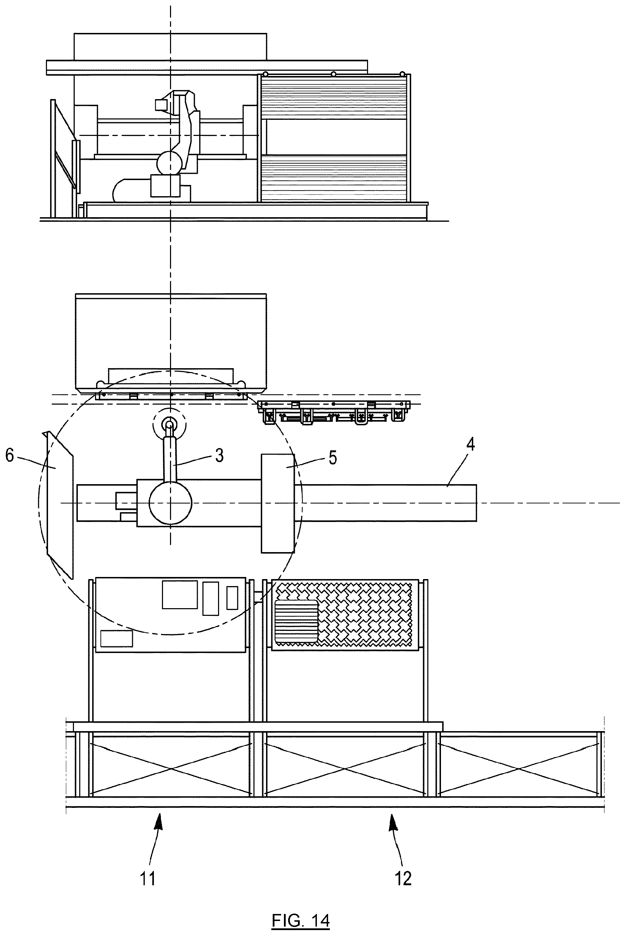

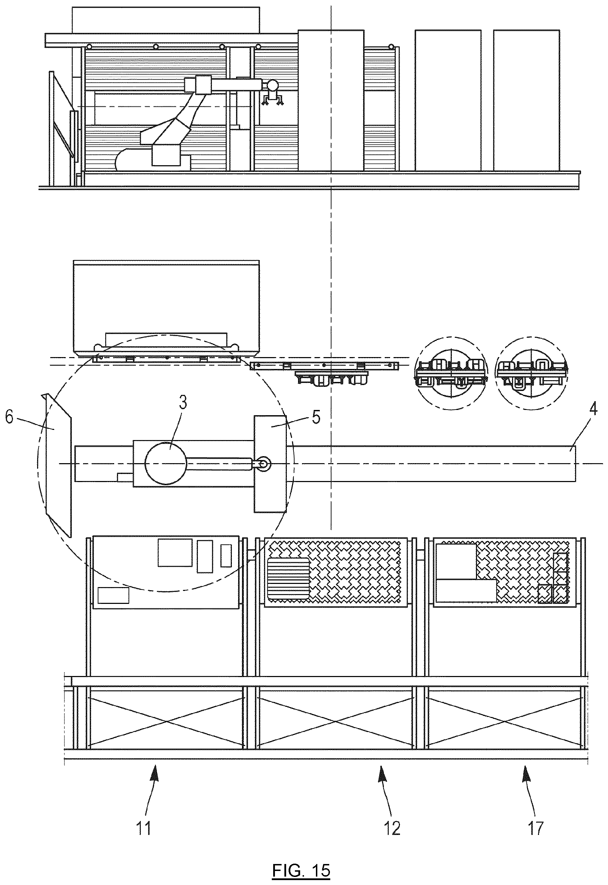

Enfin, on présentera ci-après diverses formes d'exécution préférées de l'invention pour une organisation spatiale globale et générale d'une cellule de pliage automatisée et autonome, qui reprennent les différents principes énoncés jusqu'à présent. Les deux premières solutions, représentées respectivement sur les FIG. 12 et 13, sont basées sur un repérage des pièces par cadre de repositionnement alors les deux autres solutions, représentées respectivement sur les FIG. 14 et 15, sont basées sur l'utilisation d'un cadre de référencement (ou caméra).

Selon la première forme d'exécution préférée globale représentée sur la FIG.12, le « regrip system » 5 est positionné tout à gauche de la cellule. Toutes les opérations courantes sont accessibles au périmètre de rotation du robot 3. Par exemple, il fait coulisser l'étagère à outils (en l'espèce il y a deux étagères coulissantes 7A, 7B), prend la tôle à plier venant du magasin automatisé et restitue la pièce une fois pliée à ce dernier. Ici, le magasin est à deux entrées 11, 12. On voit également à l'extrême droite deux doubles étagères tournantes 7A, 7B avec des préhenseurs 9 sur deux faces.

Selon la deuxième forme d'exécution globale préférée représentée sur la FIG. 13, le magasin automatisé est à trois entrées 11, 12, 17, respectivement une pour les pièces à plat, une autre pour les pièces pliées et enfin une troisième pour outils ou préhenseurs spécifiques et les intercalaires destinés aux empilages de pièces pliées. Le track 4 est plus long que dans le premier cas. Les préhenseurs sont localisés sur une paroi horizontale ou verticale, où ils sont logés par le robot, à partir du magasin. Les préhenseurs 9 peuvent avantageusement être fixés sur la tôle de la paroi grâce à des platines de fixation intermédiaire à quatre doigts (non représenté). Pour ce faire, la tôle présente des perforations régulières en abscisse et en ordonnée (par ex. tous les 5cm), ce qui va favoriser une imbrication optimalisée des préhenseurs. Les doigts de ces platines sont terminés par des pièces décolletées coniques (ou axes à épaulement).

Selon la troisième forme d'exécution globale préférée représentée sur la FIG. 14, un cadre de repositionnement est placé à l'extrêmegauche du track. Le chariot du robot qui se déplace le long du rack est prolongé par rapport aux solutions précédentes et supporte à son extrémité la plus à droite le système de « regrip » 5. A nouveau toutes les fonctions sont accessibles dans le périmètre de rotation du robot (par ex. mesure d'épaisseur de pièce).

De manière similaire, selon la quatrième forme d'exécution globale préférée représentée sur la FIG. 15, on a une variante de la troisième forme d'exécution où le magasin comprend trois entrées 11, 12, 17 au lieu de deux entrées 11, 12. La nature des étagères à outils/préhenseurs 7, 7A, 7B (coulissantes, rotatives) ainsi que leur disposition dans la cellule sont similaires à la situation dans les deux premières formes d'exécution.

De manière alternative, dans le cas des petites cellules (par ex. comme la cellule « Mini Cell » proposée par Safan Darley), l'approvisionnement peut se faire via une connexion au magasin automatisé par un petit kart automatisé pouvant supporter une palette par exemple au moyen d'un pantographe et se déplaçant au moyen d'un GPS (ou de tout autre système de guidage) sous les étagères du magasin automatisé. Le track dans ce cas est miniaturisé et le robot a des mouvements beaucoup plus rapides, et est très proche de toutes les fonctions/zones (aller cherche les pièces à plier, récupérer les pièces pliées, etc.).

### VARIANTE : CELLULE COMPACTE

Enfin, les figures 16A à 16D montrent encore une variante de préférence compacte pour une cellule de pliage associée à un magasin automatisé (respectivement appelée cellule « petite », « moyenne » et « grande » selon une classification arbitraire/relative).

Dans la petite cellule ou microcelllule (figure 16A), le système de palettisation est mixte (une seule entrée/sortie). Un convoyeur/extracteur de palette à chaîne 142 par exemple assure le transfert des pièces (à plier, pliées) et des outils ou autres accessoires du magasin automatisé 14 vers la cellule 1 et vice versa. Comme précédemment, une zone intermédiaire de *raw in*/*raw out* 11, 12 peut être utilisée avantageusement pour le transfert entre le magasin et la cellule (et vice versa). Dans la configuration illustrée, le magasin automatisé 14 est constitué de deux rangées parallèles de tours 141 pour le rangement de palettes 143 en hauteur, les positions de rangement étant accessibles grâce un ascenseur 144 (et/ou un AGV) qui peut aussi se déplacer longitudinalement le long du magasin. Le robot 3, de préférence de taille réduite et rapide, se déplace sur un track 4 d'axe parallèle tant au tablier de la presse-plieuse 2 qu'à la face externe (côté cellule) du magasin automatisé, de sorte que le robot 3 est toujours amené à faire face à la presse-plieuse 2 et au magasin automatisé 14. L'axe du track 4 est approximativement équidistant de la presse-plieuse 2 et du magasin automatisé 14. Cette configuration permet une compacité de la cellule. De plus, pour des raisons d'encombrement et liées au transit des pièces entre le magasin automatisé et la cellule, le track 4 est avantageusement suspendu, de sorte que l'on évite un conflit entre l'encombrement du robot et celui de l'extracteur de palettes 142.

Contrairement à la situation rencontrée dans l'état de l'art chez plusieurs fabricants, l'amplitude du déplacement du robot est fortement réduite. De plus, vu la grande proximité du robot par rapport au magasin automatisé, on peut pourvoir avantageusement la face externe de ce dernier de supports pour préhenseurs ou outils de pliage (non représenté).

Cette configuration est particulièrement adaptée aux cellules équipées de presses-plieuses de 1-1,5 m, mais sans qu'elle soit exclue dans le cas de cellules équipées de presses-plieuses de plus grande taille.

La possibilité d'amener tous les outils nécessaires dans le périmètre restreint de la cellule permet d'accroître l'autonomie totale de la cellule de manière pratiquement illimitée, la seule limite étant constituée par la capacité de programmation des opérations.

La même configuration est applicable aux cellules moyennes ou grandes (figure 16B et 16C), une différence étant que le système de palettisation n'est pas nécessairement mixte (le *raw in* et le *raw out* peuvent être séparés). On remarquera que dans la grande cellule (figures 16C), le track n'est plus suspendu mais est fixé au sol comme dans les configurations décrites plus haut.

Contrairement au cas des figures 16A à 16C, la figure 16D représente une implantation où, dans le cas d'une cellule où l'espace le permet, la presse-plieuse est approximativement centrée sur la largeur de la cellule plutôt que d'être alignée sur une des tours du magasin. Dans ce dernier cas, on peut avantageusement disposer des étagères à outils 7 (coulissantes, rotatives, etc.) de chaque côté de la presse-plieuse.

### Liste des repères de référence

- 1: cellule de pliage de tôles robotisée ou automatisée
- 2: presse-plieuse
- 3: robot
- 4: track
- 5: système de retournement (*regrip*) ou de dépose/reprise
- 6: système de mise à l'équerre ou de contrôle d'indexage ou de référencement
- 7: (magasin, étagère à) outils
- 7A, 7B: étagères coulissantes l'une par rapport à l'autre
- 7A1, 7A2: demi-étagères constituant 7A
- 7C: étagère juxtaposée dans structure portante et coulissante
- 8: dispositif de fixation des préhenseurs
- 9: Préhenseur
- 10: système de programmation et de monitoring
- 11: espace d'approvisionnement (*raw in*)
- 12: zone de dépose des pièces pliées (*raw out*)
- 13: console de commande
- 14: magasin automatisé
- 15: palette ou surface de dépose de pièces entrantes (*raw in*)
- 16: palette ou surface de dépose de pièces sortantes (*raw out*)
- 17: Préhenseurs/outils spécifiques (magasin automatisé)
- 18: Intercalaire
- 19: boîte de dépôt (*drop box*)
- 20: pièce à plier
- 21: surface de dépose pour pièces pliées
- 25: tablier inférieur de presse-plieuse
- 70: rail de roulement au sol des étagères
- 71: rail de guidage supérieur des étagères
- 72: fenêtre dans étagère
- 141: tour de stockage dans le magasin automatisé
- 142: convoyeur/extracteur de palette à chaîne
- 143: palette
- 144: Ascenseur ou transstockeur

## Revendications

1. Une installation industrielle comportant une cellule de pliage de tôles automatisée (1) ainsi qu'un magasin automatisé (14), présentant une organisation spatiale et fonctionnelle destinée à automatiser les flux de matières entrants dans et sortants de ladite cellule (1), en vue d'accroître, dans une enceinte réduite, l'autonomie de fonctionnement de la cellule sans assistance humaine, ainsi que la flexibilité et la productivité de la cellule, ladite installation comportant au moins, en vue d'assurer différentes fonctions de ladite cellule (1) :
- une presse-plieuse (2),
- un robot de pliage (3),
- un rail, généralement appelé « track » (4), sur lequel se déplace un chariot (31) supportant le robot (3),
- un système de dépose et de reprise des pièces en cours d'opération (5),
- un système de contrôle d'indexage de pièces à plier, mécanique ou optique (6),
- un magasin ou un ensemble d'étagères à outils de pliage (7), notamment des poinçons et des matrices,
- au moins un dispositif de fixation (8) de préhenseurs (9),
- un système de programmation et de monitoring (10) de la presse-plieuse (2),
- une console de commande (13),
- un magasin automatisé (14),
- une zone d'approvisionnement (11) pour pièces à plier et une zone de dépose des pièces après pliage (12),
le robot (3) étant capable d'assurer les opérations successives de placer un ou plusieurs outils de pliage dans la presse-plieuse (2), de se connecter à un des préhenseurs (9) disposés sur un des dispositifs de fixation (8), d'acheminer une pièce à plat dans la presse-plieuse (2) à partir de la zone d'approvisionnement (11), d'effectuer toutes les manipulations nécessaires à la réalisation de différents pliages, en ce compris des opérations de retournement/repositionnement et de contrôle d'indexage,
ladite installation industrielle étant **caractérisée en ce que** la cellule de pliage (1), le cas échéant avec sa zone d'approvisionnement (11) et sa zone de dépose (12), est en communication avec le magasin automatisé (14), grâce à, en tout ou en partie :
- des moyens entièrement automatisés pour acheminer des pièces à plier sur palette (143) à partir du magasin automatisé (14) vers un emplacement dédié de la cellule (1), via la zone d'approvisionnement (11) ;
- des moyens entièrement automatisés pour évacuer des pièces pliées hors de la cellule (1) et les stocker dans un endroit dédié du magasin automatisé (14), via la zone de dépose (12) ;
- des moyens entièrement automatisés pour évacuer des palettes (143) vidées de leur contenu hors de la cellule (1) et les déplacer dans un endroit dédié du magasin automatisé (14) ;
- des moyens entièrement automatisés pour acheminer dans la cellule (1), à un endroit dédié, des palettes (143) vides en provenance du magasin automatisé (14) et destinées à recevoir des pièces pliées ;
- une pluralité de dispositifs de rangement aptes à :
- stocker, dans l'enceinte de la cellule (1), à des emplacements paramétrables, l'ensemble des outils de pliage (7) nécessaires pour garantir l'autonomie de fonctionnement sans assistance de la cellule pendant une période de temps déterminée ;
- stocker, dans l'enceinte de la cellule, à des emplacements paramétrables, l'ensemble des préhenseurs (9) nécessaires à la manipulation de l'ensemble des pièces à plier et au fonctionnement autonome de la cellule pendant une période de temps déterminée ; et/ou
- être utilisés comme moyens d'interface de palettisation et de déplacement qui sont soit acheminés dans la cellule (1), soit évacués de la cellule (1), par des moyens totalement automatisés et programmables ; et qui permettent d'accroître, dans les limites de la capacité de programmation des opérations, la présence d'une quantité d'éléments nécessaires à la réalisation d'opérations effectuées par le robot (3), lesdits éléments comprenant : des outils de pliage standard, spéciaux ou réservés à l'usage exclusif d'un client, des organisateurs de commandes, des préhenseurs universels ou spécifiques, des accessoires conçus pour optimiser l'empilage de pièces pliées complexes et/ou la protection de pièces fragiles, des contenants pour la dépose en vrac de pièces de faible encombrement, des systèmes de palettisation destinés soit à l'approvisionnement de la cellule en pièces à plier, soit à la réception des pièces pliées, des systèmes de palettisation mixtes pour gérer sur une même interface de déplacement et de manière entièrement automatisée et programmable les pièces à plier, ces mêmes pièces après pliage et d'éventuels accessoires nécessaires aux opérations à réaliser sur ces pièces, et/ou des outils standard ou spéciaux destinés au stockage dans le magasin automatisé et destinés au partage entre plusieurs cellules (1), de manière automatique et programmable.

2. L'installation industrielle selon la revendication 1, **caractérisée en ce que** la presse-plieuse (2), le magasin à outils (7) et le track (4) sont disposés dans la cellule (1) en sorte qu'il existe une position de translation du robot (3) sur le track (4) telle qu'un axe de rotation vertical du robot (3) soit approximativement équidistant d'une partie avant de la presse-plieuse (2) et d'une partie avant du magasin à outils (7), permettant au robot (3) de faire face alternativement à la presse-plieuse (2) et à une section du magasin à outils (7) par une rotation comprise entre 45° et 135°, de préférence 90°, du robot (3) autour de cet axe vertical.

3. L'installation industrielle selon la revendication 1 ou 2, **caractérisée en ce que** le magasin à outils (7) comprend au moins deux plans d'étagères juxtaposées (7A, 7B), parallèles entre elles, une première étagère (7A) située à l'avant-plan et au moins une seconde étagère située à l'arrière-plan (7B), au moins la première étagère étant divisée en deux éléments (7A1, 7A2), montées sur un rail de roulement (70) posé au sol et guidées par un rail de guidage (71) en leur partie supérieure, les deux éléments (7A1, 7B1) étant mobiles et aptes à se déplacer soit vers l'intérieur, soit vers l'extérieur sur le rail de roulement (70).

4. L'installation industrielle selon la revendication 1, **caractérisée en ce que** le magasin à outils comprend au moins une étagère (7) mobile, montée sur un rail de roulement (70) posé au sol et guidée par un rail de guidage (71) en sa partie supérieure et apte à se positionner en vis-à-vis de la presse-plieuse (2) et parallèlement à celle-ci, l'étagère (7) étant pourvue d'une fenêtre (72) permettant de donner au robot (3) un accès à des rainures de fixation des outils de pliage dans la presse-plieuse (2).

5. L'installation industrielle selon la revendication 4, **caractérisée en ce que** le magasin à outils comprend deux étagères (7A, 7B) mobiles par rapport à la presse-plieuse (2), l'une des étagères (7A) pouvant coulisser à gauche de la presse-plieuse (2) et l'autre étagère (7B) pouvant coulisser à droite de la presse-plieuse (2).

6. L'installation industrielle selon la revendication 4, **caractérisée en ce que** le magasin à outils comprend une pluralité d'étagères (7C) juxtaposées parallèlement entre elles et dont la hauteur est inférieure à celle d'un tablier inférieur de la presse-plieuse (2), une structure portante permettant de positionner chacune des étagères (7C) vis-à-vis du rail de roulement (70) qui permet d'amener chacune desdites étagères (7C) vis-à-vis dudit tablier inférieur.

7. L'installation industrielle selon l'une quelconques des revendications 4 à 6, **caractérisée en ce que** le système de dépose/reprise (5), respectivement le système de contrôle d'indexage (6) est positionné en bout de rack (4) du côté où se trouve la presse plieuse (2), en sorte qu'il existe une position de translation du robot (3) sur le track (4) telle qu'un axe de rotation vertical du robot (3) soit approximativement équidistant d'une partie avant de la presse-plieuse (2) et d'une partie avant du système de dépose/reprise (5), respectivement du système de contrôle d'indexage (6), permettant au robot (3) de faire face alternativement à la presse-plieuse (2) et au système de dépose/reprise (5), respectivement au système de contrôle d'indexage (6), par une rotation d'environ 90° du robot (3) autour de cet axe vertical.

8. L'installation industrielle selon la revendication 7, **caractérisée en ce que**, lorsque le système de contrôle d'indexage (6) est positionné en bout de rack (4), le chariot supportant le robot (3) est allongé de manière à supporter un système de dépose/reprise (5), du côté distal au système de contrôle d'indexage (6).

9. L'installation industrielle selon la revendication 2, **caractérisée en ce que** le magasin à outils comprend au moins deux étagères (7) juxtaposées côte à côte en ligne, chaque étagère étant équipée d'outils sur ses deux faces (7A, 7B) et montées rotatives sur une base permettant une rotation motorisée de l'étagère de 180° pour l'accès au robot (3).

10. L'installation industrielle selon la revendication 9, **caractérisée en ce que** le magasin à outils comprend deux ou trois étagères (7) montées rotatives et disposées en cercle pour permettre un accès approximativement équidistant du robot (3).

11. L'installation industrielle selon la revendication 9 ou 10, **caractérisée en ce que** les étagères montées rotatives (7) sont des blocs à étagères sous forme de prismes droits à N faces verticales, N = 3, 4, 5, ...

12. L'installation industrielle selon la revendication 11, **caractérisée en ce que** les blocs d'étagères montées rotatives remplissent des fonctions différentes d'une face à l'autre, notamment comportent des outils de pliage sur une face, des préhenseurs sur une autre face, un système de dépose/reprise ou un système de contrôle d'épaisseur encore sur une autre face.

13. L'installation industrielle selon la revendication 1, **caractérisée en ce qu'**elle comprend un premier jeu de palettes (15) disposé dans la zone d'approvisionnement (11) pour l'approvisionnement entièrement automatisé des pièces à plier du magasin automatisé (14) vers la cellule (1), via la zone d'approvisionnement (11), et un second jeu de palettes (16) disposé dans la zone de dépose (12), pour l'évacuation entièrement automatisée des pièces après pliage de la cellule (1) vers le magasin automatisé (14), via la zone de dépose (12).

14. L'installation industrielle selon la revendication 13, **caractérisée en ce que** la zone d'approvisionnement (11) et la zone de dépose (12) coïncident, de même que le premier jeu et le second jeu de palettes (15, 16).

15. L'installation industrielle selon la revendication 1, **caractérisée en ce que** la cellule de pliage (1) est également couplée au magasin automatisé (14) via un système ou une zone de partages d'outils, de préhenseurs, d'intercalaires ou autres accessoires (17), situé(e) dans la cellule (1).

16. L'installation industrielle selon la revendication 1 ou 15, **caractérisée en ce qu'**elle comprend un convoyeur/extracteur de palette à chaîne (142) ou encore un ou plusieurs engins déplacés et guidés automatiquement, par exemple de type AGV pouvant supporter une palette, par exemple au moyen d'un dispositif mécanique à pantographe, pour l'approvisionnement de la cellule (1) en pièces à partir du magasin automatisé (14), respectivement le retour de pièces de la cellule (1) vers le magasin automatisé (14).

17. L'installation industrielle selon la revendication 1 ou 15, **caractérisée en ce qu'**elle comprend une cellule de pliage (1) compacte, dont l'axe du track (4) sur lequel le robot (3) se déplace est parallèle tant à une face avant de la presse-plieuse (2) qu'à une face externe, côté cellule, du magasin automatisé (14), l'axe du track (4) étant approximativement équidistant de chacune desdites faces.

18. L'installation selon la revendication 17, **caractérisée en ce que** le track (4) est monté suspendu.

19. L'installation selon la revendication 17, **caractérisée en ce que** ladite face externe, côté cellule, du magasin automatisé (14) est conçue pour recevoir des préhenseurs (9) et/ou des outils de pliage (7).

20. Une méthode de mise en œuvre d'une installation industrielle comprenant une cellule de pliage de tôles automatisée (1) ainsi qu'un magasin automatisé (14) selon l'une quelconque des revendications 1 à 19, ladite méthode comprenant au moins une partie des étapes suivantes dans un ordre approprié :
- l'approvisionnement automatisé des pièces à plier du magasin automatisé vers la cellule (1), via la zone d'approvisionnement (11) ;
- l'évacuation automatisée des pièces après pliage de la cellule (1) vers le magasin automatisé, via la zone de dépose (12) ;
- le rangement et le stockage des outils de pliage (7) et la fixation de préhenseurs (9) sur une pluralité de dispositifs de rangement (100, 101, 102) faisant office respectivement de magasin ou d'étagères d'outils (7), et de dispositif (8) de fixation de préhenseurs (9) ;
- l'acheminement vers ou l'évacuation de la cellule (1), entièrement automatisé(e) et programmable, d'une pluralité d'éléments nécessaires à la réalisation d'au moins certaines fonctions de la cellule (1) qui ne sont pas présents dans la cellule en permanence, à partir du ou vers le magasin automatisé respectivement, ces éléments comprenant des outils de pliage standard, spéciaux ou réservés à l'usage exclusif d'un client, des préhenseurs universels ou spécifiques, des accessoires pour l'optimisation de l'empilage de pièces pliées et/ou la protection de pièces fragiles, des contenants pour la dépose en vrac de pièces de faible encombrement, des systèmes de palettisation destinés soit à l'approvisionnement de la cellule en pièces à plier, soit à la réception des pièces pliées, des systèmes de palettisation mixtes ou plurifonctionnels et des organisateurs de commande.

## Patentansprüche

1. Industrielle Anlage, die eine automatisierte Blech-Biegezelle (1) sowie ein automatisiertes Lager (14) umfasst, und die eine räumliche und funktionelle Organisation aufweist, welche darauf ausgelegt ist, den Fluss von Materialien, die in die Zelle (1) eintreten und davon austreten, zu automatisieren, um in einem verkleinerten Innenraum die Betriebsautonomie der Zelle ohne menschliche Unterstützung, ebenso wie die Flexibilität und die Produktivität der Zelle, zu erhöhen, wobei die Anlage mindestens Folgendes umfasst, um die verschiedenen Funktionen der Zelle (1) sicherzustellen:
- eine Abkantpresse (2),
- einen Biegeroboter (3),
- eine Schiene, im Allgemeinen als "Führungsbahn" (4) bezeichnet, auf der sich ein Wagen (31) bewegt, der den Roboter (3) trägt,
- ein System zur Ablage und Wiederaufnahme von Werkstücken im Laufe des Betriebs (5),
- ein System zur mechanischen oder optischen Steuerung der Indexierung von Werkstücken, die gebogen werden sollen (6),
- ein Lager oder eine Regalanordnung mit Biegewerkzeugen (7), insbesondere Stempeln und Matrizen,
- mindestens eine Vorrichtung zur Befestigung (8) von Greifern (9),
- ein System zur Programmierung und Überwachung (10) der Abkantpresse (2),
- eine Steuerkonsole (13),
- ein automatisiertes Lager (14),
- einen Versorgungsbereich (11) für Werkstücke, die gebogen werden sollen, und einen Ablagebereich der Werkstücke nach dem Biegen (12),
wobei der Roboter (3) dazu in der Lage ist, die aufeinanderfolgenden Vorgänge sicherzustellen, die darin bestehen, ein oder mehrere Biegewerkzeuge in die Abkantpresse (2) zu platzieren, sich mit einem der Greifer (9), die auf einer der Befestigungsvorrichtungen (8) angeordnet sind, zu verbinden, ein flaches Werkstück vom Versorgungsbereich (11) hin zur Abkantpresse (2) zu befördern, alle erforderliche Handhabungen zur Durchführung von verschiedenen Biegungen auszuführen, darin eingeschlossen Vorgänge zur Umdrehung/Neupositionierung und Steuerung der Indexierung,
wobei die Anlage **dadurch gekennzeichnet ist, dass** die Biegezelle (1), gegebenenfalls mit ihrem Versorgungsbereich (11) und ihrem Ablagebereich (12) teilweise oder vollständig mithilfe des Folgenden in Verbindung mit dem automatisierten Lager (14) ist:
- vollautomatisierte Mittel, um Werkstücke, die gebogen werden sollen und auf einer Palette (143) liegen, vom automatisierten Lager (14) über den Versorgungsbereich (11) hin zu einer spezifischen Stelle der Zelle (1) zu befördern;
- vollautomatisierte Mittel, um gebogene Werkstücke aus der Zelle (1) zu entfernen und sie über den Ablagebereich (12) an einem spezifischen Ort des automatisierten Lagers (14) zu lagern;
- vollautomatisierte Mittel, um von ihrem Inhalt geleerte Paletten (143) aus der Zelle (1) zu entfernen und sie an einen spezifischen Ort des automatisierten Lagers (14) zu bewegen;
- vollautomatisierte Mittel, um an einen spezifischen Ort der Zelle (1) leere Paletten (143), die aus dem automatisierten Lager (14) stammen und dazu vorgesehen sind, gebogene Werkstücke aufzunehmen, zu bewegen;
- eine Vielzahl von Aufbewahrungsvorrichtungen, die darauf ausgelegt sind:
- im Innenraum der Zelle (1), an konfigurierbaren Stellen, alle Biegewerkzeuge (7) zu lagern, die erforderlich sind, um während eines bestimmten Zeitraums die Betriebsautonomie der Zelle ohne Unterstützung zu garantieren;
- im Innenraum der Zelle, an konfigurierbaren Stellen, alle Greifer (9) zu lagern, die erforderlich sind, um alle Werkstücke, die gebogen werden sollen, zu handhaben, und den autonomen Betrieb der Zelle während eines bestimmten Zeitraums sicherzustellen; und/oder
- als Schnittstellenmittel zur Palettierung und Bewegung verwendet zu werden, die durch vollständig automatisierte und programmierbare Mittel entweder in die Zelle (1) gefördert oder aus der Zelle entfernt (1) werden; und die ermöglichen, solange die Programmierungskapazität der Vorgänge es erlaubt, das Vorhandensein einer Menge von Elementen zu erhöhen, die erforderlich sind, um Vorgänge, die vom Roboter (3) durchgeführt werden, auszuführen, wobei die Elemente Folgendes umfassen: Standard-Biegewerkzeuge, Spezial-Biegewerkzeuge, Biegewerkzeuge, die für die ausschließliche Verwendung durch einen Kunden geeignet sind, Bestellungsorganisatoren, universelle oder spezifische Greifer, Zubehör, das entworfen ist, um die Stapelung von komplexen gebogenen Werkstücken zu optimieren und/oder zerbrechliche Werkstücke zu schützen, Behälter für die lose Ablage von Werkstücken mit kleiner Stellfläche, Palettierungssysteme, die entweder für die Versorgung der Zelle mit Werkstücken, die gebogen werden sollen, oder für die Aufnahme von gebogenen Werkstücken ausgelegt sind, gemischte Palettierungssysteme zur Steuerung auf einer selben Bewegungsschnittstelle und auf vollständig automatisierte und programmierbare Art und Weise, der Werkstücke, die gebogen werden sollen, dieser Werkstücke nach dem Biegen und des eventuellen Zubehörs, das für die Vorgänge, die auf diesen Werkstücken durchgeführt werden sollen, erforderlich ist, und/oder Standard- oder Spezialwerkzeuge, die für die Lagerung im automatisierten Lager und für die Aufteilung zwischen mehreren Zellen (1) auf automatisierte und programmierbare Weise ausgelegt sind.

2. Industrielle Anlage nach Anspruch 1, **dadurch gekennzeichnet, dass** die Abkantpresse (2), das Werkzeuglager (7) und die Führungsbahn (4) in der Zelle (1) so angeordnet sind, dass eine Translationsposition des Roboters (3) auf der Führungsbahn (4) vorhanden ist, so dass eine vertikale Rotationsachse des Roboters (3) von einem vorderen Teil der Abkantpresse (2) und einem vorderen Teil des Werkzeuglagers (7) ungefähr gleich weit entfernt ist, was dem Roboter (3) ermöglicht, abwechselnd der Abkantpresse (2) und einem Abschnitt des Werkzeuglagers (7) gegenüberzuliegen, indem der Roboter um 45° bis 135°, vorzugsweise um 90°, um diese vertikale Achse gedreht wird.

3. Industrielle Anlage nach Anspruch 1 oder 2, **dadurch gekennzeichnet, dass** das Werkzeuglager (7) mindestens zwei Ebenen von parallelen und nebeneinanderliegenden Regalen (7A, 7B) umfasst, wobei sich ein erstes Regal (7A) in der vorderen Ebene befindet, und wobei sich mindestens ein zweites Regal in der hinteren Ebene (7B) befindet, wobei mindestens das erste Regal in zwei Elemente (7A1, 7A2) unterteilt ist, die auf einer Rollschiene (70), welche auf den Boden gelegt ist, montiert sind, und an ihrem oberen Teil von einer Führungsschiene (71) geführt sind, wobei die zwei Elemente (7A1, 7B1) beweglich und darauf ausgelegt sind, sich entweder nach innen oder nach außen auf der Rollschiene (70) zu bewegen.

4. Industrielle Anlage nach Anspruch 1, **dadurch gekennzeichnet, dass** das Werkzeuglager mindestens ein bewegliches Regal (7) umfasst, das auf einer Rollschiene (70), die auf den Boden gelegt ist, montiert ist, und an ihrem oberen Teil von einer Führungsschiene (71) geführt ist, und darauf ausgelegt ist, sich gegenüber der Abkantpresse (2) und parallel zu letzterer zu positionieren, wobei das Regal (7) mit einem Fenster (72) ausgestattet ist, das ermöglicht, dem Roboter (3) Zugang zu Befestigungsnuten für die Biegewerkzeuge in der Abkantpresse (2) zu geben.

5. Industrielle Anlage nach Anspruch 4, **dadurch gekennzeichnet, dass** das Werkzeuglager zwei Regale (7A, 7B), die mit Bezug auf die Abkantpresse (2) beweglich sind, umfasst, wobei eines der Regale (7A) von der Abkantpresse (2) aus gesehen nach links gleiten kann und das andere Regal (7B) von der Abkantpresse (2) aus gesehen nach rechts gleiten kann.

6. Industrielle Anlage nach Anspruch 4, **dadurch gekennzeichnet, dass** das Werkzeuglager eine Vielzahl von Regalen (7C) umfasst, die parallel zueinander und nebeneinandergestellt sind, und deren Höhe geringer als diejenige einer unteren Tafel der Abkantpresse (2) ist, wobei eine tragende Struktur es ermöglicht, jedes der Regale (7C) gegenüber der Rollschiene (70) zu positionieren, welche ermöglicht, jedes der Regale (7C) gegenüber der unteren Tafel zu führen.

7. Industrielle Anlage nach einem der Ansprüche 4 bis 6, **dadurch gekennzeichnet, dass** das System zur Ablage/Wiederaufnahme (5) bzw. das System zur Steuerung der Indexierung (6) am Ende der Führungsbahn (4) positioniert ist, an der Seite, an der sich die Abkantpresse (2) befindet, so dass eine Translationsposition des Roboters (3) auf der Führungsbahn (4) vorhanden ist, so dass eine vertikale Rotationsachse des Roboters (3) von einem vorderen Teil der Abkantpresse (2) und von einem vorderen Teil des Ablage-/Wiederaufnahmesystems (5) bzw. des Systems der Steuerung der Indexierung (6) ungefähr gleich weit entfernt ist, wodurch dem Roboter (3) ermöglicht wird, abwechselnd der Abkantpresse (2) und dem Ablage-/Wiederaufnahmesystem (5) bzw. dem System zur Steuerung der Indexierung (6) gegenüberzuliegen, indem der Roboter um ungefähr 90° um diese vertikale Achse gedreht wird.

8. Industrielle Anlage nach Anspruch 7, **dadurch gekennzeichnet, dass**, wenn das System zur Steuerung der Indexierung (6) am Ende der Führungsbahn (4) positioniert ist, der Wagen, der den Roboter (3) trägt, verlängert ist, um ein Ablage-/Wiederaufnahmesystem (5) auf der Seite, die zum System zur Steuerung der Indexierung (6) distal ist, zu tragen.

9. Industrielle Anlage nach Anspruch 2, **dadurch gekennzeichnet, dass** das Werkzeuglager mindestens zwei Regale (7) umfasst, die Seite an Seite in einer Reihe nebeneinandergestellt sind, wobei jedes Regal auf beiden Seiten (7A, 7B) mit Werkzeugen ausgestattet ist und drehend auf einer Basis montiert ist, die eine motorisierte Drehung des Regals um 180° für den Zugang zum Roboter (3) ermöglicht.

10. Industrielle Anlage nach Anspruch 9, **dadurch gekennzeichnet, dass** das Werkzeuglager zwei oder drei Regale (7) umfasst, die drehbar montiert und im Kreis angeordnet sind, um mit ungefähr dem gleichen Abstand einen Zugang zum Roboter (3) zu ermöglichen.

11. Industrielle Anlage nach Anspruch 9 oder 10, **dadurch gekennzeichnet, dass** die drehend montierten Regale (7) Regalblöcke in Form von geraden Prismen mit N vertikalen Seiten sind, wobei N = 3, 4, 5, ...ist.

12. Industrielle Anlage nach Anspruch 11, **dadurch gekennzeichnet, dass** die Blöcke von Regalen, die drehend montiert sind, von einer Seite zur anderen verschiedene Funktionen erfüllen, insbesondere Biegewerkzeuge auf einer Seite, Greifer auf einer anderen Seite, ein Ablage-/Wiederaufnahmesystem oder ein System zur Steuerung der Dicke auf noch einer anderen Seite umfassen.

13. Industrielle Anlage nach Anspruch 1, **dadurch gekennzeichnet, dass** sie einen ersten Satz von Paletten (15) umfasst, der im Versorgungsbereich (11) angeordnet ist, um auf eine vollständig automatisierte Art und Weise die Werkstücke, die gebogen werden sollen, vom automatischen Lager (14) über den Versorgungsbereich (11) hin zur Zelle (1) zu versorgen, und einen zweiten Satz von Paletten (16), der in der Ablagezone (12) angeordnet ist, um auf eine vollständig automatisierte Art und Weise die Werkstücke nach dem Biegen von der Zelle (1) über die Ablagezone (12) hin zum automatischen Lager (14) zu entfernen.

14. Industrielle Anlage nach Anspruch 13, **dadurch gekennzeichnet, dass** der Versorgungsbereich (11) und der Ablagebereich (12) zusammenfallen, ebenso wie der erste Satz und der zweite Satz von Paletten (15, 16).

15. Industrielle Anlage nach Anspruch 1, **dadurch gekennzeichnet, dass** die Biegezelle (1) ebenso an das automatisierte Lager (14) über ein System oder einen Bereich für die Teilungen von Werkzeugen, Greifern, Zwischenschichten oder anderem Zubehör (17) gekoppelt ist, das/der sich in der Zelle (1) befindet.

16. Industrielle Anlage nach Anspruch 1 oder 15, **dadurch gekennzeichnet, dass** sie einen Palettenförderer/-abzieher mit Ketten (142) oder auch ein oder mehrere automatisch bewegte und geführte Fahrzeug(e) umfasst, z. B vom Typ AGV, der eine Palette tragen kann, z. B. mit Hilfe einer mechanischen Pantograph-Vorrichtung, zur Versorgung der Zelle (1) mit Werkstücken vom automatisierten Lager (14) bzw. zur Rückkehr von Werkstücken aus der Zelle (1) in das automatische Lager (14).

17. Industrielle Anlage nach Anspruch 1 oder 15, **dadurch gekennzeichnet, dass** sie eine kompakte Biegezelle (1) umfasst, wobei die Achse der Führungsbahn (4), auf der sich der Roboter (3) bewegt, parallel sowohl zu einer vorderen Seite der Abkantpresse (2) als auch zu einer Außenseite, auf der Seite der Zelle, des automatischen Lagers (14) ist, wobei die Achse der Führungsbahn (4) von jeder der Seiten ungefähr gleich entfernt ist.

18. Anlage nach Anspruch 17, **dadurch gekennzeichnet, dass** die Führungsbahn (4) aufgehängt montiert ist.

19. Anlage nach Anspruch 17, **dadurch gekennzeichnet, dass** die Außenseite, auf der Seite der Zelle, des automatischen Lagers (14) entworfen ist, um Greifer (9) und/oder Biegewerkzeuge (7) aufzunehmen.

20. Verfahren zum Betrieb einer industriellen Anlage, die eine automatisierte Blech-Biegezelle (1) sowie ein automatisiertes Lager (14) nach einem der Ansprüche 1 bis 19 umfasst, wobei das Verfahren mindestens einen Teil der folgenden Schritte in einer geeigneten Reihenfolge umfasst:
- automatisiertes Fördern der Werkstücke, die gebogen werden sollen, vom automatisierten Lager (14) über den Versorgungsbereich (11) hin zur Zelle (1);
- automatisiertes Entfernen der Werkstücke nach dem Biegen aus der Zelle (1) über den Ablagebereich (12) hin zum automatisierten Lager (14);
- die Aufbewahrung und die Lagerung der Biegewerkzeuge (7) sowie die Befestigung von Greifern (9) auf einer Vielzahl von Aufbewahrungsvorrichtungen (100, 101, 102), die jeweils als Lager oder Werkzeugregal (7) und als Vorrichtung (8) zur Befestigung von Greifern (9) dienen;
- vollautomatisiertes und programmiertes Fördern hin zu oder Entfernen aus der Zelle (1) einer Vielzahl von Elementen, die für die Durchführung mindestens bestimmter Funktionen der Zelle (1) erforderlich sind, die nicht ständig in der Zelle vorhanden sind, jeweils aus dem oder hin zum automatisierten Lager, wobei diese Elemente standardmäßige, spezielle oder für die ausschließliche Verwendung durch einen Kunden geeignete Biegewerkzeuge, universelle oder spezifische Greifer, Zubehör für die Optimierung der Stapelung von gebogenen Werkstücken und/oder für den Schutz von zerbrechlichen Werkstücken, Behälter für die lose Ablage von Werkstücken mit kleiner Stellfläche, Palettierungssysteme, die entweder für die Versorgung der Zelle mit Werkstücken, die gebogen werden sollen, oder für die Aufnahme von gebogenen Werkstücken ausgelegt sind, gemischte oder multifunktionale Palettierungssysteme und Bestellungsorganisatoren sind.

## Claims

1. An industrial installation comprising an automated sheet metal bending cell (1) as well as an automated magazine (14), having a spatial and functional organization intended to automate the flows of materials entering and leaving said cell (1), in order to increase, in a reduced enclosure, the autonomy of operation of the cell without human assistance, as well as the flexibility and the productivity of the cell, said installation comprising, in order to perform various functions of said cell, at least (1):
- a press brake (2),
- a bending robot (3),
- a rail, generally called "track" (4), on which a carriage (31) supporting the robot (3) moves,
- a system for depositing and retrieving parts during operation (5),
- a mechanical or optical system for controlling indexing of the parts to be bent (6),
- a magazine or a set of shelves for bending tools (7), in particular punches and dies,
- at least one attachment device (8) for grippers (9),
- a programming and monitoring system (10) for the press brake (2),
- a control console (13),
- an automated magazine (14),
- a supply area (11) for the parts to be bent and a area for depositing the parts after bending (12),
the robot (3) being capable of performing the successive operations of placing one or several bending tools in the press brake (2), connecting to one of the grippers (9) arranged on one of the attachment devices (8), conveying a flat part into the press brake (2) from the supply area (11), performing all the manipulations necessary to carry out various bending operations, including regripping/repositioning and indexing control operations, said industrial installation being **characterized in that** the bending cell (1), if applicable with its supply area (11) and its depositing area (12), is in communication with the automated magazine (14), owing, in whole or in part, to:
- fully automated means for conveying parts to be bent on a pallet (143) from the automated magazine (14) to a dedicated location of the cell (1), via the supply area (11);
- fully automated means for removing bent parts outside the cell (1) and storing them in a dedicated location of the automated magazine (14), via the depositing area (12);
- fully automated means for removing pallets (143) emptied of their content outside the cell (1) and moving them to a dedicated location of the automated magazine (14);
- fully automated means for conveying into the cell (1), to a dedicated location, empty pallets (143) coming from the automated magazine (14) and intended to receive bent parts;
- a plurality of storage devices able to:
- store, in the enclosure of the cell (1), at configurable locations, all the bending tools (7) necessary to guarantee the autonomy of operation of the cell without assistance during a determined time period;
- store, in the enclosure of the cell, at configurable locations, all the grippers (9) necessary for the manipulation of all the parts to be bent and the autonomous operation of the cell for a determined time period; and/or
- be used as palletizing and movement interface means that are either conveyed into the cell (1), or removed from the cell (1), by fully automated and programmable means; and that make it possible to increase, within the limits of the operation programming capacity, the presence of a quantity of elements necessary to perform operations carried out by the robot (3), said elements comprising: standard bending tools, special bending tools, or bending tools reserved for exclusive use by a client, order organizers, universal or specific grippers, accessories designed to optimize the stacking of complex bent parts and/or protect breakable parts, containers for bulk depositing of compact parts, palletizing systems intended either to supply the cell with parts to be bent or to receive bent parts, mixed palletizing systems to handle, on a same movement interface and in a fully automated and programmable manner, the parts to be bent, these same parts after bending and any accessories necessary for the operations to be carried out on these parts, and/or standard or special tools used for storage in the automated magazine and intended to be shared among several cells (1), in an automated and programmable manner.

2. The industrial installation according to claim 1, **characterized in that** the press brake (2), the tool magazine (7) and the track (4) are arranged in the cell (1) in such a way that a translation position of the robot (3) on the track (4) exists such that a vertical axis of rotation of the robot (3) is approximately equidistant from a front part of the press brake (2) and from a front part of the tool magazine (7), allowing the robot (3) to alternatively face the press brake (2) and a section of the tool magazine (7) by a rotation of between 45° and 135°, preferably 90°, of the robot (3) about this vertical axis.

3. The industrial installation according to claim 1 or 2, **characterized in that** the tool magazine (7) comprises at least two planes of juxtaposed shelves (7A, 7B) that are parallel to one another, a first shelf (7A) located in the foreground and at least one second shelf located in the background (7B), at least the first shelf being divided into two elements (7A1, 7A2), which are mounted on a rolling track (70) placed on the ground and are guided by a guide track (71) in their upper part, the two elements (7A1, 7B1) being movable and able to move either inward or outward on the rolling track (70).

4. The industrial installation according to claim 1, **characterized in that** the tool magazine comprises at least one movable shelf (7), which are mounted on a rolling track (70) placed on the ground and are guided by a guide track (71) in their upper part and able to be positioned opposite the press brake (2) and parallel thereto, the shelf (7) being provided with a window (72) making it possible to give the robot (3) access to attachment grooves for the bending tools in the press brake (2).

5. The industrial installation according to claim 4, **characterized in that** the tool magazine comprises two shelves (7A, 7B) that are movable relative to the press brake (2), one of the shelves (7A) being able to slide to the left of the press brake (2) and the other shelf (7B) being able to slide to the right of the press brake (2).

6. The industrial installation according to claim 4, **characterized in that** the tool magazine comprises a plurality of shelves (7C) that are juxtaposed parallel to one another and the height of which is less than that of a lower bed of the press brake (2), a support structure making it possible to position each of the shelves (7C) opposite the rolling track (70) which makes it possible to bring each of said shelves (7C) opposite said lower apron.

7. The industrial installation according to any one of claims 4 to 6, **characterized in that** the depositing/retrieval system (5), the indexing control system (6), respectively, is positioned at the end of the track (4) on the side where the press brake (2) is located, such that there is a translational position of the robot (3) on the track (4) such that a vertical axis of rotation of the robot (3) is approximately equidistant from a front part of the press brake (2) and a front part of the depositing/retrieval system (5), of the indexing control system (6), respectively, allowing the robot (3) to alternatively face the press brake (2) and the depositing/retrieval system (5), the indexing control system (6), respectively, by rotating the robot (3) by about 90° about this vertical axis.

8. The industrial installation according to claim 7, **characterized in that**, when the indexing control system (6) is positioned at the end of the track (4), the carriage supporting the robot (3) is elongated so as to support a depositing/retrieval system (5), on the side distal to the indexing control system (6).

9. The industrial installation according to claim 2, **characterized in that** the tool magazine comprises at least two shelves (7) juxtaposed side by side in line, each shelf being equipped with tools on its two faces (7A, 7B) and mounted rotating on a base allowing a motorized rotation of the shelf by 180° for access to the robot (3).

10. The industrial installation according to claim 9, **characterized in that** the tool magazine comprises two or three shelves (7) rotatably mounted and arranged in a circle to allow approximately equidistant access by the robot (3).

11. The industrial installation according to claim 9 or 10, **characterized in that** the rotatably mounted shelves (7) are shelf blocks in the form of straight prisms with N vertical faces, N = 3, 4, 5, ...

12. The industrial installation according to claim 11, **characterized in that** the blocks of rotatably mounted shelves perform different functions from one face to the other, in particular they comprise bending tools on one face, grippers on another face, a depositing/retrieval system or a thickness control system on yet another face.

13. The industrial installation according to claim 1, **characterized in that** it comprises a first set of pallets (15) arranged in the supply area (11) for the fully automated supply of parts to be bent from the automated magazine (14) toward the cell (1), via the supply area (11), and a second set of pallets (16) arranged in the depositing area (12), for the fully automated removal of the parts after bending from the cell (1) toward the automated magazine (14), via the depositing area (12).

14. The industrial installation according to claim 13, **characterized in that** the supply area (11) and the depositing area (12) coincide, as do the first set and the second set of pallets (15, 16).

15. The industrial installation according to claim 1, **characterized in that** the bending cell (1) is also coupled to the automated magazine (14) via a system or area for sharing tools, grippers, inserts or other accessories (17), located in the cell (1).

16. The industrial installation according to claim 1 or 15, **characterized in that** it comprises a chain pallet conveyor/extractor (142) or one or several vehicles moved and guided automatically, for example of the AGV type, able to support a pallet, for example using a pantograph mechanical device, to supply the cell (1) with parts from the automated magazine (14), respectively to return parts from the cell (1) toward the automated magazine (14).

17. The industrial installation according to claim 1 or 15, **characterized in that** it comprises a compact bending cell (1), whereof the axis of the track (4) on which the robot (3) moves is parallel both to a front face of the press brake (2) and to an outer face, on the cell side, of the automated magazine (14), the axis of the track (4) being approximately equidistant from each of said faces.

18. The installation according to claim 17, **characterized in that** the track (4) is mounted suspended.

19. The installation according to claim 17, **characterized in that** said outer face, on the cell side, of the automated magazine (14) is designed to receive grippers (9) and/or bending tools (7).

20. A method for implementing an industrial installation comprising an automated sheet metal bending cell (1) as well as an automated magazine (14) according to any one of claims 1 to 19, said method comprising at least part of the following steps in an appropriate order:
- automated supply of parts to be bent from the automated magazine toward the cell (1), via the supply area (11);
- automated removal of the parts after bending from the cell (1) toward the automated magazine, via the depositing area (12);
- storing and warehousing the bending tools (7) and attaching grippers (9) on a plurality of storage devices (100, 101, 102) respectively serving as a tool magazine or shelves (7), and as an attachment device (8) for grippers (9);
- conveying to or removing from the cell (1), in a fully automated and programmable manner, a plurality of elements necessary to carry out at least some functions of the cell (1) that are not present in the cell at all times, from or toward the automated magazine, respectively, these elements comprising standard bending tools, special bending tools, or bending tools reserved for exclusive use by a client, universal or specific grippers, accessories for optimizing stacking of bent parts and/or for protecting breakable parts, containers for bulk depositing of compact parts, palletizing systems intended either to supply the cell with parts to be bent, or to receive bent parts, mixed or multifunctional palletizing systems and order organizers.
